# EUROPEAN PATENT APPLICATION

(11) **EP 4 708 784 A1**
(43) Date of publication of application: **11.03.2026**
(21) Application number: 24830144.2
(22) Date of filing: 30.04.2024
(51) Int. Cl.: H04L 12/46

(54) **METHOD FOR SECURELY TRANSMITTING PACKET, AND RELATED DEVICE**

(30) Priority: 30.06.2023 CN 202310803215
(71) Applicant: Huawei Technologies Co., Ltd., Shenzhen, Guangdong 518129 (CN)
(72) Inventor: PIAN, Zhikang, Shenzhen, Guangdong 518129 (CN); GUO, Tianping, Shenzhen, Guangdong 518129 (CN); PANG, Donglei, Shenzhen, Guangdong 518129 (CN); DONG, Jiajia, Shenzhen, Guangdong 518129 (CN); SHENG, Cheng, Shenzhen, Guangdong 518129 (CN); HU, Di, Shenzhen, Guangdong 518129 (CN); JIN, Haiyan, Shenzhen, Guangdong 518129 (CN); TIAN, Tao, Shenzhen, Guangdong 518129 (CN)
(74) Representative: Gill Jennings & Every LLP
(86) International application number: PCT/CN2024/091039
(87) International publication number: WO 2025/001496

(57) **Abstract**

This application provides a secure packet transmission method, a method for negotiating an IPsec SA, and a related apparatus, and is applied to a wide area network. In a scenario of crossing a plurality of segments of tunnels, an IPsec SA used for end-to-end security protection is negotiated between a first site edge and a second site edge based on a VRF granularity by extending a BGP route. After performing security protection on a VPN service packet based on the IPsec SA, the first site edge sends the packet through an overlay end-to-end tunnel between the first site edge and the second site edge, and the second site edge processes the packet based on the IPsec SA, to obtain the VPN service packet. In this application, the security protection needs to be performed only once at the first site edge, and an intermediate node does not need to perform encryption and decryption. In this way, secure packet transmission is ensured, transmission efficiency is improved, and a transmission delay is reduced.

## Description

This application claims priority to Chinese Patent Application No. 202310803215.6, filed with the China National Intellectual Property Administration on June 30, 2023 and entitled "SECURE PACKET TRANSMISSION METHOD AND RELATED APPARATUS", which is incorporated herein by reference in its entirety.

### TECHNICAL FIELD

This application relates to the field of wide area network packet transmission, and in particular, to a secure packet transmission method, a method for negotiating an IPsec SA, and a related apparatus.

### BACKGROUND

Based on an underlay (underlay) network, an overlay (overlay) network may be constructed by establishing tunnels between a plurality of network nodes. The overlay network decouples a service from the underlay network, so that fast end-to-end delivery of a service packet can be implemented.

However, the tunnel is established based on a carrier network, and the network cannot ensure security of the service packet. Therefore, the tunnel needs to have a specific security capability to ensure the security of the service packet. Currently, a commonly used method is as follows: When a tunnel is established on a control plane, key negotiation is performed between an ingress node of the tunnel and an egress node of the tunnel according to a border gateway protocol (border gateway protocol, BGP) based on a transport network port (transport network port, TNP) granularity, where a key is bound to a port of the ingress node of the tunnel and a port of the egress node of the tunnel. After the tunnel is established, when transmission of a service packet is performed in the tunnel, the ingress node encrypts the service packet based on a key negotiated with the egress node, so that the service packet is in an encrypted state when transmission of the service packet is performed in the tunnel. When the service packet arrives at the egress node of the tunnel, the egress node decrypts the service packet based on the negotiated key, to ensure security of transmission of the service packet.

In the foregoing method for encryption, decryption, and transmission of the packet based on a TNP granularity of the network node, for each segment of tunnel, key information needs to be negotiated between the ingress node and the egress node. When transmission of the service packet is performed in the segment of tunnel, encryption is performed by an ingress node of the segment of tunnel in a negotiation manner, and decryption is performed by an egress node of the segment of tunnel in the negotiation manner. When a service flow needs to cross a plurality of segments of tunnels, keys of the segments of tunnels are different. Therefore, encryption needs to be performed by an ingress node of each segment of tunnel, decryption needs to be performed by an egress node of each segment of tunnel, encryption needs to be performed again by an ingress node of a next segment of tunnel, decryption needs to be performed again by an egress node of the next segment of tunnel, and so on. Encryption and decryption operations are complex; and a large quantity of computing resources of a device are consumed. This increases a forwarding delay of the service packet.

### SUMMARY

This application provides a secure packet transmission method, a method for negotiating an IPsec SA, and a related apparatus. According to the methods in this application, packet transmission efficiency can be improved, and a transmission delay is reduced.

According to a first aspect, this application provides a secure packet transmission method. The method is described from a transmit side of a data forwarding plane, and the method includes:
A first site egress device edge in a wide area network receives a virtual private network VPN service packet in virtual routing and forwarding VRF;
the first site edge performs security protection on the VPN service packet based on an internet protocol security security association IPsec SA that is associated with the VRF and that is negotiated with a second site edge, to obtain a first packet;
the first site edge encapsulates, into an outer layer of the first packet, tunnel information of an overlay overlay end-to-end tunnel established between the first site edge and the second site edge, to obtain a second packet, where an underlay underlay tunnel corresponding to the overlay end-to-end tunnel includes a plurality of segments of tunnels, the tunnel information includes first information of a first point of presence POP, the first site edge is an ingress endpoint of the overlay end-to-end tunnel, the second site edge is an egress endpoint of the overlay end-to-end tunnel, and the overlay end-to-end tunnel passes through the first POP; and
the first site edge sends the second packet to the second site edge through the overlay end-to-end tunnel.

In the solution of this application, in a scenario of crossing the plurality of segments of tunnels between the first site edge and the second site edge, the first site edge and the second site edge pre-negotiate the IPsec SA that is associated with the VRF. After receiving the VPN service packet in the VRF, the first site edge performs the security protection on the VPN service packet based on the IPsec SA that is associated with the VRF and that is negotiated with the second site edge, to obtain the first packet. Further, the first site edge encapsulates, into the outer layer of the first packet, the tunnel information of the overlay overlay end-to-end tunnel established between the first site edge and the second site edge, to obtain the second packet. Then, the first site edge performs transmission of the second packet to the second site edge through the overlay overlay end-to-end tunnel. Each POP through which the overlay end-to-end tunnel passes does not need to decrypt or encrypt the second packet, and only needs to forward the second packet based on the tunnel information.

In the scenario of crossing the plurality of segments of tunnels between the first site edge and the second site edge, this application provides a secure packet transmission method. In the method, security protection needs to be performed only once on an ingress endpoint of an overlay end-to-end tunnel established between two site edges. In a transmission process, each POP does not need to encrypt or decrypt the packet. In this way, computing power resources are saved, a transmission delay is reduced, and packet transmission efficiency is improved.

According to the first aspect, in a possible implementation, performing security protection on the VPN service packet includes: performing encapsulating security payload ESP protocol encryption on the VPN service packet; and/or encapsulating an authentication header authentication header into the VPN service packet.

According to the first aspect, in a possible implementation, the tunnel information further includes second information of a second POP, the overlay end-to-end tunnel passes through the first POP and the second POP, the first site edge accesses the wide area network via the first POP, and the second site edge accesses the wide area network via the second POP.

According to the first aspect, in a possible implementation, the overlay end-to-end tunnel is a segment routing over internet protocol version 6 IPv6 SRv6 tunnel, the second packet includes an IPv6 header and a segment routing header SRH, a destination address of the IPv6 header points to the first POP, and the SRH includes the first information and the second information.

The overlay end-to-end tunnel may be an SRv6 tunnel. The first site edge encapsulates tunnel information of the SRv6 tunnel into the outer layer of the first packet. The tunnel information of the SRv6 tunnel includes the IPv6 header and the segment routing header SRH. Each POP on the tunnel may forward the second packet based on the IPv6 header and the segment routing header SRH.

According to the first aspect, in a possible implementation, the first information is a first endpoint segment identifier END.SID of the first POP, and an operation associated with the first endpoint segment identifier END.SID includes: matching an overlay overlay SRv6 policy between the first POP and the second POP based on a next-hop SID of the END.SID.

According to the first aspect, in a possible implementation, the overlay end-to-end tunnel is a segment routing multi-protocol label switching traffic engineering policy SR-MPLS TE policy, the second packet includes an MPLS label stack, and the MPLS label stack includes the first information and the second information.

According to the first aspect, in a possible implementation, the first information is a first node SID of the first POP, and an operation associated with the first node SID includes: matching an overlay overlay SR MPLS tunnel from the first POP to the second POP based on a next-hop SID of the first node SID in the label stack.

According to the first aspect, in a possible implementation, the overlay end-to-end tunnel is a tunnel encapsulated based on a generic network virtualization encapsulation GENEVE protocol, and the second packet is encapsulated based on SRv6 in GENEVE.

According to the first aspect, in a possible implementation, the overlay end-to-end tunnel is a tunnel encapsulated based on a generic routing encapsulation GRE protocol, and the second packet is encapsulated based on SRv6 over GRE.

According to the first aspect, in a possible implementation, before receiving, by the first site edge, the service packet, the method further includes:

The first site edge receives a border gateway protocol BGP route advertised by the second site edge, where the BGP route includes a route type RT, the IPsec SA, an identifier of the second site edge, and an export route target export RT, where the route type RT indicates that the IPsec SA of the BGP route advertisement is used for performing end-to-end security protection on the VPN service packet in the virtual routing and forwarding VRF that matches the export RT; and the first site edge associates the IPsec SA with the VRF based on the route type RT and the export RT.

A new route type is added to the BGP route. The BGP route carries the IPsec SA and the export RT. The newly added route type RT indicates that the IPsec SA of the BGP route advertisement is used for performing end-to-end security protection on the VPN service packet in the VRF that matches the export RT. Through the BGP route advertisement, the first site edge and the second site edge negotiate the IPsec SA that is associated with the VRF, and the IPsec SA is used for performing security protection on the VPN service packet in the VRF. In particular, in a case of crossing the plurality of segments of tunnels between the first site edge and the second site edge, this lays a foundation for secure and fast transmission of the VPN service packet. According to this embodiment of this application, the secure and fast transmission of the VPN service packet is implemented, the transmission delay is reduced, and the transmission efficiency is improved.

According to the first aspect, in a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

According to the first aspect, in a possible implementation, the identifier of the second site edge includes a site identifier site ID to which the second site edge belongs and/or a node identifier node ID of the second site edge. In an implementation, the identifier of the second site edge may be a second site identifier site ID and a node identifier node ID, and the second site edge may be determined by using the second site identifier site ID and the node identifier node ID. The first site edge and the second site edge perform security protection and transmission on the service packet based on the negotiated IPsec SA. In another implementation, the identifier of the second site edge may be a node identifier node ID. The node ID is globally unique in the wide area network, and the second site edge may be determined based on the node ID. In another implementation, the identifier of the second site edge may be a second site identifier site ID. In this case, any edge of a first site receives a BGP route advertised by any edge of a second site, and the BGP route carries an identifier of the second site and the IPsec SA. This indicates that a key negotiated between the first site and the second site is the IPsec SA, and the edge of the first site and the edge of the second site may perform security protection and transmission on the service packet based on the negotiated IPsec SA.

According to the first aspect, in a possible implementation, the BGP route includes network layer reachability information NLRI, and the NLRI includes the route type RT and the identifier of the second site edge.

According to the first aspect, in a possible implementation, the BGP route includes a tunnel encapsulation attribute type-length-value tunnel encapsulation attribute TLV, and the tunnel encapsulation attribute TLV includes the IPsec SA.

According to the first aspect, in a possible implementation, the BGP route includes an extended community attribute, and the extended community attribute is used for carrying the export RT.

According to the first aspect, in a possible implementation, the first site edge and the second site edge are site edges in a software-defined wide area network SD-WAN.

According to a second aspect, this application provides a secure packet transmission method. The method is described from a receive side of a data forwarding plane, and the method includes:

A second site egress device edge in a wide area network receives a second packet that is sent by a first site edge through an overlay overlay end-to-end tunnel established between the first site edge and the second site edge, where the second packet includes a first packet and tunnel information that is of the overlay end-to-end tunnel and that is encapsulated into an outer layer of the first packet, an underlay underlay tunnel corresponding to the overlay end-to-end tunnel includes a plurality of segments of tunnels, the tunnel information includes first information of a first point of presence POP, the first site edge is an ingress endpoint of the overlay end-to-end tunnel, the second site edge is an egress endpoint of the overlay end-to-end tunnel, the overlay end-to-end tunnel passes through the first POP, and the first packet is a packet obtained by performing security protection on a virtual private network VPN service packet based on an internet protocol security security association IPsec SA negotiated between the second site edge and the first site edge; and the second site edge decapsulates the second packet, to obtain the first packet; and
the second site edge processes the first packet based on the IPsec SA, to obtain the VPN service packet.

After receiving the second packet, where the second packet includes the first packet and the tunnel information that is encapsulated into the outer layer of the first packet, the second site edge decapsulates on the second packet, to obtain the first packet, and then processes the first packet based on the IPsec SA that is negotiated with the first site edge, to obtain the VPN service packet. In an entire transmission process of the second packet, each POP on the overlay end-to-end tunnel does not need to perform encryption or decryption, and processing needs to be performed only once at the second site edge. In this way, transmission efficiency is improved, and a transmission delay is reduced.

According to the second aspect, in a possible implementation, processing the first packet includes: performing encapsulating security payload ESP protocol decryption on the first packet based on the IPsec SA; and/or performing authentication on the first packet based on the IPsec SA and authentication data carried in an authentication header authentication header of the first packet.

According to the second aspect, in a possible implementation, the tunnel information further includes second information of a second POP, the overlay end-to-end tunnel passes through the first POP and the second POP, the first site edge accesses the wide area network via the first POP, and the second site edge accesses the wide area network via the second POP.

According to the second aspect, in a possible implementation, the overlay end-to-end tunnel is a segment routing over internet protocol version 6 IPv6 SRv6 tunnel, the second packet includes an IPv6 header and a segment routing header SRH, a destination address of the IPv6 header points to the first POP, and the SRH header includes the first information and the second information.

According to the second aspect, in a possible implementation, the first information is a first endpoint segment identifier END.SID of the first POP, and an operation associated with the first endpoint segment identifier END.SID includes: matching an overlay overlay SRv6 policy between the first POP and the second POP based on a next-hop SID of the END.SID.

According to the second aspect, in a possible implementation, the overlay end-to-end tunnel is a segment routing multi-protocol label switching traffic engineering policy SR-MPLS TE policy, the second packet includes an MPLS label stack, and the MPLS label stack includes the first information and the second information.

According to the second aspect, in a possible implementation, the first information is a first node SID of the first POP, and an operation associated with the first node SID includes:
matching an overlay overlay SR MPLS tunnel from the first POP to the second POP based on a next-hop SID of the first node SID in the label stack.

According to the second aspect, in a possible implementation, the overlay end-to-end tunnel is a tunnel encapsulated based on a generic network virtualization encapsulation GENEVE protocol, and the second packet is encapsulated based on SRv6 in GENEVE.

According to the second aspect, in a possible implementation, the overlay end-to-end tunnel is a tunnel encapsulated based on a generic routing encapsulation GRE protocol, and the second packet is encapsulated based on SRv6 over GRE.

According to the second aspect, in a possible implementation, before the second site egress device edge in the wide area network receives the second packet that is sent by the first site edge through the overlay overlay end-to-end tunnel, the method further includes: The second site egress device edge generates a border gateway protocol BGP route, where the BGP route includes a route type RT, the IPsec SA, an identifier of the second site edge, and an export route target export RT, where the route type RT indicates that the IPsec SA of the BGP route advertisement is used for performing end-to-end security protection on the VPN service packet in virtual routing and forwarding VRF that matches the export RT; and the second site edge advertises the BGP route to the first site edge.

According to the second aspect, in a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

According to the second aspect, in a possible implementation, the identifier of the second site edge includes a site identifier site ID to which the second site edge belongs and/or a node identifier node ID of the second site edge.

According to the second aspect, in a possible implementation, the BGP route includes network layer reachability information NLRI, and the NLRI includes the route type RT and the identifier of the second site edge.

According to the second aspect, in a possible implementation, the BGP route includes a tunnel encapsulation attribute type-length-value tunnel encapsulation attribute TLV, and the tunnel encapsulation attribute TLV includes the IPsec SA.

According to the second aspect, in a possible implementation, the BGP route includes an extended community attribute, and the extended community attribute is used for carrying the export RT.

According to the second aspect, in a possible implementation, the first site edge and the second site edge are site edges in a software-defined wide area network SD-WAN.

According to a third aspect, this application provides a method for negotiating an internet protocol security security association IPsec SA. The method is described from a receive side of a control plane, and the method includes:

A first site egress device edge in a wide area network receives a border gateway protocol BGP route advertised by a second site edge, where the BGP route includes a route type RT, the IPsec SA, an identifier of the second site edge, and an export route target export RT, where the route type RT indicates that the IPsec SA of the BGP route advertisement is used for performing end-to-end security protection on a service packet in virtual routing and forwarding VRF that matches the export RT; and
the first site edge associates the IPsec SA with the VRF based on the route type RT and the export RT.

In the solution of this application, a new route type RT is added to the BGP route. The BGP route carries the IPsec SA and the export route target export RT. The newly added route type RT indicates that the IPsec SA of the BGP route advertisement is used for performing end-to-end security protection on the service packet in the VRF that matches the export RT. The BGP route is advertised in the wide area network, so that end-to-end IPsec SA negotiation between two site edges is implemented based on a VRF granularity. In this way, transmission of the VPN service packet is subsequently performed by using the negotiated IPsec SA. This lays a foundation for the transmission of the VPN service packet.

According to the third aspect, in a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

According to the third aspect, in a possible implementation, the identifier of the second site edge includes a site identifier site ID to which the second site edge belongs and/or a node identifier node ID of the second site edge.

It may be understood that, the identifier of the second site edge may be a second site identifier site ID and a node identifier node ID, and the second site edge may be determined by using the second site identifier site ID and the node identifier node ID. The first site edge and the second site edge agree on the IPsec SA through negotiation. In another implementation, the identifier of the second site edge may be a node identifier node ID. The node ID is globally unique in the wide area network, and the second site edge may be determined based on the node ID. The first site edge and the second site edge agree on the IPsec SA through negotiation. In another implementation, the identifier of the second site edge may be a second site identifier site ID. In this case, any edge of a first site receives a BGP route advertised by any edge of a second site, and the BGP route carries an identifier of a second site and the IPsec SA. This indicates that a key negotiated between the first site and the second site is the IPsec SA, and subsequently, the edge of the first site and the edge of the second site may perform security protection and transmission on the service packet based on the negotiated key IPsec SA.

According to the third aspect, in a possible implementation, the BGP route includes network layer reachability information NLRI, and the NLRI includes the route type RT and the identifier of the second site edge.

According to the third aspect, in a possible implementation, the BGP route includes a tunnel encapsulation attribute type-length-value tunnel encapsulation attribute TLV, and the tunnel encapsulation attribute TLV includes the IPsec SA.

According to the third aspect, in a possible implementation, the BGP route includes an extended community attribute, and the extended community attribute is used for carrying the export RT.

According to the third aspect, in a possible implementation, the first site edge and the second site edge are site edges in a software-defined wide area network SD-WAN.

According to a fourth aspect, this application provides a method for negotiating an internet protocol security security association IPsec SA. The method is described from a transmit side of a control plane, and the method includes:

A second site egress device edge in a wide area network generates a border gateway protocol BGP route, where the BGP route includes a route type RT, the IPsec SA, an identifier of the second site edge, and an export route target export RT, where the route type RT indicates that the IPsec SA of the BGP route advertisement is used for performing end-to-end security protection on a service packet in virtual routing and forwarding VRF that matches the export RT; and
the second site edge advertises the BGP route to a first site edge.

In the solution of this application, a new route type RT is added to the BGP route. The BGP route carries the IPsec SA and the export route target export RT. The newly added route type RT indicates that the IPsec SA of the BGP route advertisement is used for performing end-to-end security protection on the service packet in the VRF that matches the export RT. The BGP route is advertised in the wide area network, so that end-to-end IPsec SA negotiation between two site edges is implemented based on a VRF granularity. In this way, transmission of a VPN service packet is subsequently performed by using the negotiated IPsec SA. This lays a foundation for the transmission of the VPN service packet.

According to the fourth aspect, in a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

According to the fourth aspect, in a possible implementation, the identifier of the second site edge includes a site identifier site ID to which the second site edge belongs and/or a node identifier node ID of the second site edge. The identifier of the second site edge may be a second site identifier site ID and a node identifier node ID, and the second site edge may be determined by using the second site identifier site ID and the node identifier node ID. The first site edge and the second site edge agree on the IPsec SA through negotiation. In another implementation, the identifier of the second site edge may be a node identifier node ID. The node ID is globally unique in the wide area network, and the second site edge may be determined based on the node ID. The first site edge and the second site edge agree on the IPsec SA through negotiation. In another implementation, the identifier of the second site edge may be a second site identifier site ID. In this case, any edge of a first site receives a BGP route advertised by any edge of a second site, and the BGP route carries an identifier of the second site and the IPsec SA. This indicates that a key negotiated between the first site and the second site is the IPsec SA, and subsequently, the edge of the first site and the edge of the second site may perform security protection and transmission on the service packet based on the negotiated key IPsec SA.

According to the fourth aspect, in a possible implementation, the BGP route includes network layer reachability information NLRI, and the NLRI includes the route type RT and the identifier of the second site edge.

According to the fourth aspect, in a possible implementation, the BGP route includes a tunnel encapsulation attribute type-length-value tunnel encapsulation attribute TLV, and the tunnel encapsulation attribute TLV includes the IPsec SA.

According to the fourth aspect, in a possible implementation, the BGP route includes an extended community attribute, and the extended community attribute is used for carrying the export RT.

According to the fourth aspect, in a possible implementation, the first site edge and the second site edge are site edges in a software-defined wide area network SD-WAN.

According to a fifth aspect, this application provides a secure packet transmission apparatus. The apparatus is used in a first site egress device edge in a wide area network, and the apparatus includes:
a receiving module, configured to: receive a virtual private network VPN service packet in virtual routing and forwarding VRF;
a processing module, configured to: perform security protection on the VPN service packet based on an internet protocol security security association IPsec SA that is associated with the VRF and that is negotiated with a second site edge, to obtain a first packet, where
the processing module is configured to: encapsulate, into an outer layer of the first packet, tunnel information of an overlay overlay end-to-end tunnel established between the first site edge and the second site edge, to obtain a second packet, where an underlay underlay tunnel corresponding to the overlay end-to-end tunnel includes a plurality of segments of tunnels, the tunnel information includes first information of a first point of presence POP, the first site edge is an ingress endpoint of the overlay end-to-end tunnel, the second site edge is an egress endpoint of the overlay end-to-end tunnel, and the overlay end-to-end tunnel passes through the first POP; and
a sending module, configured to send the second packet to the second site edge through the overlay end-to-end tunnel.

According to the fifth aspect, in a possible implementation, the processing module is configured to: perform encapsulating security payload ESP protocol encryption on the VPN service packet; and/or encapsulate an authentication header authentication header into the VPN service packet.

According to the fifth aspect, in a possible implementation, the tunnel information further includes second information of a second POP, the overlay end-to-end tunnel passes through the first POP and the second POP, the first site edge accesses the wide area network via the first POP, and the second site edge accesses the wide area network via the second POP.

According to the fifth aspect, in a possible implementation, the overlay end-to-end tunnel is a segment routing over internet protocol version 6 IPv6 SRv6 tunnel, the second packet includes an IPv6 header and a segment routing header SRH, a destination address of the IPv6 header points to the first POP, and the SRH includes the first information and the second information.

According to the fifth aspect, in a possible implementation, the first information is a first endpoint segment identifier END.SID of the first POP, and an operation associated with the first endpoint segment identifier END.SID includes: matching an overlay overlay SRv6 policy between the first POP and the second POP based on a next-hop SID of the END.SID.

According to the fifth aspect, in a possible implementation, the overlay end-to-end tunnel is a segment routing multi-protocol label switching traffic engineering policy SR-MPLS TE policy, the second packet includes an MPLS label stack, and the MPLS label stack includes the first information and the second information.

According to the fifth aspect, in a possible implementation, the first information is a first node SID of the first POP, and an operation associated with the first node SID includes: matching an overlay overlay SR MPLS tunnel from the first POP to the second POP based on a next-hop SID of the first node SID in the label stack.

According to the fifth aspect, in a possible implementation, the overlay end-to-end tunnel is a tunnel encapsulated based on a generic network virtualization encapsulation GENEVE protocol, and the second packet is encapsulated based on SRv6 in GENEVE.

According to the fifth aspect, in a possible implementation, the overlay end-to-end tunnel is a tunnel encapsulated based on a generic routing encapsulation GRE protocol, and the second packet is encapsulated based on SRv6 over GRE.

According to the fifth aspect, in a possible implementation, the receiving module is further configured to: receive a border gateway protocol BGP route advertised by the second site edge, where the BGP route includes a route type RT, the IPsec SA, an identifier of the second site edge, and an export route target export RT, where the route type RT indicates that the IPsec SA of the BGP route advertisement is used for performing end-to-end security protection on the VPN service packet in the virtual routing and forwarding VRF that matches the export RT; and the processing module is further configured to: associate the IPsec SA with the VRF based on the route type RT and the export RT.

According to the fifth aspect, in a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

According to the fifth aspect, in a possible implementation, the identifier of the second site edge includes a site identifier site ID to which the second site edge belongs and/or a node identifier node ID of the second site edge.

According to the fifth aspect, in a possible implementation, the BGP route includes network layer reachability information NLRI, and the NLRI includes the route type RT and the identifier of the second site edge.

According to the fifth aspect, in a possible implementation, the BGP route includes a tunnel encapsulation attribute type-length-value tunnel encapsulation attribute TLV, and the tunnel encapsulation attribute TLV includes the IPsec SA.

According to the fifth aspect, in a possible implementation, the BGP route includes an extended community attribute, and the extended community attribute is used for carrying the export RT.

According to the fifth aspect, in a possible implementation, the first site edge and the second site edge are site edges in a software-defined wide area network SD-WAN.

Functional modules in the fifth aspect are configured to implement the method according to the first aspect and any one of possible implementations of the first aspect.

According to a sixth aspect, this application provides a secure packet transmission apparatus. The apparatus is used in a second site edge in a wide area network, and the apparatus includes:
a receiving module, configured to: receive a second packet that is sent by a first site edge through an overlay overlay end-to-end tunnel established between the first site edge and the second site edge, where the second packet includes a first packet and tunnel information that is of the overlay end-to-end tunnel and that is encapsulated into an outer layer of the first packet, an underlay underlay tunnel corresponding to the overlay end-to-end tunnel includes a plurality of segments of tunnels, the tunnel information includes first information of a first point of presence POP, the first site edge is an ingress endpoint of the overlay end-to-end tunnel, the second site edge is an egress endpoint of the overlay end-to-end tunnel, the overlay end-to-end tunnel passes through the first POP, and the first packet is a packet obtained by performing security protection on a virtual private network VPN service packet based on an internet protocol security security association IPsec SA negotiated between the second site edge and the first site edge; and
a processing module, configured to: decapsulate the second packet, to obtain the first packet, where
the processing module is further configured to: process the first packet based on the IPsec SA, to obtain the VPN service packet.

According to the sixth aspect, in a possible implementation, the processing module is configured to: perform encapsulating security payload ESP protocol decryption on the first packet based on the IPsec SA; and/or perform authentication on the first packet based on the IPsec SA and authentication data carried in an authentication header authentication header of the first packet.

According to the sixth aspect, in a possible implementation, the tunnel information further includes second information of a second POP, the overlay end-to-end tunnel passes through the first POP and the second POP, the first site edge accesses the wide area network via the first POP, and the second site edge accesses the wide area network via the second POP.

According to the sixth aspect, in a possible implementation, the overlay end-to-end tunnel is a segment routing over internet protocol version 6 IPv6 SRv6 tunnel, the second packet includes an IPv6 header and a segment routing header SRH, a destination address of the IPv6 header points to the first POP, and the SRH header includes the first information and the second information.

According to the sixth aspect, in a possible implementation, the first information is a first endpoint segment identifier END.SID of the first POP, and an operation associated with the first endpoint segment identifier END.SID includes: matching an overlay overlay SRv6 policy between the first POP and the second POP based on a next-hop SID of the END.SID.

According to the sixth aspect, in a possible implementation, the overlay end-to-end tunnel is a segment routing multi-protocol label switching traffic engineering policy SR-MPLS TE policy, the second packet includes an MPLS label stack, and the MPLS label stack includes the first information and the second information.

According to the sixth aspect, in a possible implementation, the first information is a first node SID of the first POP, and an operation associated with the first node SID includes: matching an overlay overlay SR MPLS tunnel from the first POP to the second POP based on a next-hop SID of the first node SID in the label stack.

According to the sixth aspect, in a possible implementation, the overlay end-to-end tunnel is a tunnel encapsulated based on a generic network virtualization encapsulation GENEVE protocol, and the second packet is encapsulated based on SRv6 in GENEVE.

According to the sixth aspect, in a possible implementation, the overlay end-to-end tunnel is a tunnel encapsulated based on a generic routing encapsulation GRE protocol, and the second packet is encapsulated based on SRv6 over GRE.

According to the sixth aspect, in a possible implementation,
the processing module is further configured to: generate a border gateway protocol BGP route, where the BGP route includes a route type RT, the IPsec SA, an identifier of the second site edge, and an export route target export RT, where the route type RT indicates that the IPsec SA of the BGP route advertisement is used for performing end-to-end security protection on the VPN service packet in virtual routing and forwarding VRF that matches the export RT; and
a sending module is configured to advertise the BGP route to the first site edge.

According to the sixth aspect, in a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

According to the sixth aspect, in a possible implementation, the identifier of the second site edge includes a site identifier site ID to which the second site edge belongs and/or a node identifier node ID of the second site edge.

According to the sixth aspect, in a possible implementation, the BGP route includes network layer reachability information NLRI, and the NLRI includes the route type RT and the identifier of the second site edge.

According to the sixth aspect, in a possible implementation, the BGP route includes a tunnel encapsulation attribute type-length-value tunnel encapsulation attribute TLV, and the tunnel encapsulation attribute TLV includes the IPsec SA.

According to the sixth aspect, in a possible implementation, the BGP route includes an extended community attribute, and the extended community attribute is used for carrying the export RT.

According to the sixth aspect, in a possible implementation, the first site edge and the second site edge are site edges in a software-defined wide area network SD-WAN.

Functional modules in the sixth aspect are configured to implement the method according to the second aspect and any one of possible implementations of the second aspect.

According to a seventh aspect, this application provides an apparatus for negotiating an internet protocol security security association IPsec SA. The apparatus is used in a first site edge in a wide area network, and the apparatus includes:
a receiving module, configured to: receive a border gateway protocol BGP route advertised by a second site edge, where the BGP route includes a route type RT, the IPsec SA, an identifier of the second site edge, and an export route target export RT, where the route type RT indicates that the IPsec SA of the BGP route advertisement is used for performing end-to-end security protection on a service packet in virtual routing and forwarding VRF that matches the export RT; and
a processing module, configured to: associate the IPsec SA with the VRF based on the route type RT and the export RT.

According to the seventh aspect, in a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

According to the seventh aspect, in a possible implementation, the identifier of the second site edge includes a site identifier site ID to which the second site edge belongs and/or a node identifier node ID of the second site edge.

According to the seventh aspect, in a possible implementation, the BGP route includes network layer reachability information NLRI, and the NLRI includes the route type RT and the identifier of the second site edge.

According to the seventh aspect, in a possible implementation, the BGP route includes a tunnel encapsulation attribute type-length-value tunnel encapsulation attribute TLV, and the tunnel encapsulation attribute TLV includes the IPsec SA.

According to the seventh aspect, in a possible implementation, the BGP route includes an extended community attribute, and the extended community attribute is used for carrying the export RT.

According to the seventh aspect, in a possible implementation, the first site edge and the second site edge are site edges in a software-defined wide area network SD-WAN.

Functional modules in the seventh aspect are configured to implement the method according to the third aspect and any one of possible implementations of the third aspect.

According to an eighth aspect, this application provides an apparatus for negotiating an internet protocol security security association IPsec SA. The apparatus is used in a second site edge in a wide area network, and the apparatus includes:
a processing module, configured to: generate a border gateway protocol BGP route, where the BGP route includes a route type RT, the IPsec SA, an identifier of the second site edge, and an export route target export RT, where the route type RT indicates that the IPsec SA of the BGP route advertisement is used for performing end-to-end security protection on a service packet in virtual routing and forwarding VRF that matches the export RT; and
a sending module, configured to: advertise the BGP route to a first site edge.

According to the eighth aspect, in a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

According to the eighth aspect, in a possible implementation, the identifier of the second site edge includes a site identifier site ID to which the second site edge belongs and a node identifier node ID of the second site edge.

According to the eighth aspect, in a possible implementation, the BGP route includes network layer reachability information NLRI, and the NLRI includes the route type RT and/or the identifier of the second site edge.

According to the eighth aspect, in a possible implementation, the BGP route includes a tunnel encapsulation attribute type-length-value tunnel encapsulation attribute TLV, and the tunnel encapsulation attribute TLV includes the IPsec SA.

According to the eighth aspect, in a possible implementation, the BGP route includes an extended community attribute, and the extended community attribute is used for carrying the export RT.

According to the eighth aspect, in a possible implementation, the first site edge and the second site edge are site edges in a software-defined wide area network SD-WAN.

Functional modules in the eighth aspect are configured to implement the method according to the fourth aspect and any one of possible implementations of the fourth aspect.

According to a ninth aspect, this application provides a network device, including a memory and a processor. The memory is configured to store instructions, and the processor is configured to execute the instructions stored in the memory, to implement the method according to the first aspect and any one of possible implementations of the first aspect, or to implement the method according to the second aspect and any one of possible implementations of the second aspect, or to implement the method according to the third aspect and any one of possible implementations of the third aspect, or to implement the method according to the fourth aspect and any one of possible implementations of the fourth aspect.

According to a tenth aspect, this application provides a system, including a first site egress device edge and a second site edge. The first site edge is configured to perform the method according to the first aspect and any one of possible implementations of the first aspect, and the second site edge is configured to perform the method according to the second aspect and any one of possible implementations of the second aspect; or the first site edge is configured to perform the method according to the third aspect and any one of possible implementations of the third aspect, and the second site edge is configured to perform the method according to the fourth aspect and any one of possible implementation of the fourth aspect.

According to an eleventh aspect, this application provides a computer storage medium, including program instructions. When the program instructions are executed on a processor, the processor is enabled to implement the method according to the first aspect and any one of possible implementations of the first aspect, or the processor is enabled to implement the method according to the second aspect and any one of possible implementations of the second aspect, or the processor is enabled to implement the method according to the third aspect and any one of possible implementations of the third aspect, or the processor is enabled to implement the method according to the fourth aspect and any one of possible implementations of the fourth aspect.

According to a twelfth aspect, this application provides a computer program product including program instructions. When the program instructions are executed on a processor, the processor is enabled to implement the method according to the first aspect and any one of possible implementations of the first aspect, or the processor is enabled to implement the method according to the second aspect and any one of possible implementations of the second aspect, or the processor is enabled to implement the method according to the third aspect and any one of possible implementations of the third aspect, or the processor is enabled to implement the method according to the fourth aspect and any one of possible implementations of the fourth aspect.

### BRIEF DESCRIPTION OF DRAWINGS

FIG. 1 is a diagram of a scenario according to this application;
FIG. 2 is a schematic flowchart of a method for negotiating an IPsec SA according to this application;
FIG. 3 is a diagram of a part of a structure of a BGP SD-WAN routing packet according to this application;
FIG. 4 is a diagram of a part of a structure of a BGP EVPN routing packet according to this application;
FIG. 5 is a schematic flowchart of a secure packet transmission method according to this application;
FIG. 6A is a diagram of a structure of a VPN service packet according to this application;
FIG. 6B is a diagram of a structure of a first packet according to this application;
FIG. 6C is a diagram of a structure of a second packet according to this application;
FIG. 7 is a diagram of a structure of a second packet according to this application;
FIG. 8 is a diagram of a structure of another second packet according to this application;
FIG. 9 is a schematic flowchart of a secure packet transmission method according to this application;
FIG. 10 is a diagram of a structure of a secure packet transmission apparatus according to this application;
FIG. 11 is a diagram of a structure of another secure packet transmission apparatus according to this application; and
FIG. 12 is a diagram of a structure of a network device according to this application.

### DESCRIPTION OF EMBODIMENTS

The following clearly and completely describes technical solutions in embodiments of this application with reference to accompanying drawings in embodiments of this application.

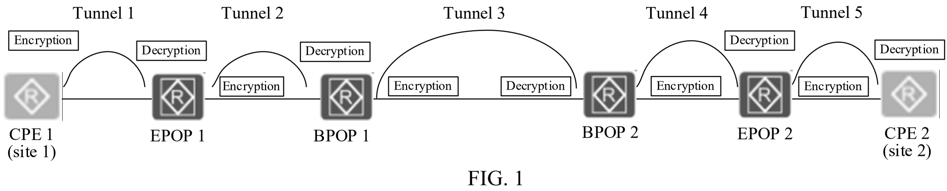

FIG. 1 is a diagram of a scenario according to this application. In a software-defined wide area network (software-defined wide area network, SD-WAN) shown in FIG. 1, an SD-WAN tunnel is established between points of presence (points of presence, POP) in an underlay network. A tunnel 1 is established between customer-premises equipment (customer-premises equipment, CPE) 1 and an edge point of presence (edge point of presence, EPOP) 1, a tunnel 2 is established between the EPOP 1 and a backbone point of presence (backbone point of presence, BPOP) 1, a tunnel 3 is established between the BPOP 1 and a BPOP 2, a tunnel 4 is established between the BPOP 2 and an EPOP 2, and a tunnel 5 is established between the EPOP 2 and CPE 2, where the CPE 1 is located in a site 1, and the CPE 2 is located in a site 2. An ingress node and an egress node that are of each segment of tunnel perform key negotiation based on a TNP granularity.

In an application scenario, based on an actual service requirement, transmission of a service flow (service packet) needs to be performed from the CPE 1 to the CPE 2, that is, transmission of the service packet needs to be performed from the CPE 1 to the CPE 2 across a plurality of segments of tunnels. First, a CPE 1 node encrypts the service packet based on a key that is negotiated between the CPE 1 and the EPOP 1 and that is on the tunnel 1, and when transmission of the service packet to the EPOP 1 is performed, an EPOP 1 node decrypts the packet based on the negotiated key. When the service packet arrives at the tunnel 2, the EPOP 1 node encrypts the service packet based on a key that is negotiated between the EPOP 1 and the BPOP 1 and that is on the tunnel 2, when transmission of the service packet to the BPOP 1 is performed, a BPOP 1 node decrypts the service packet based on the negotiated key, and so on. Until transmission of the packet to the tunnel 5 is performed, an EPOP 2 node encrypts the service packet based on a key that is negotiated between the EPOP 2 and the CPE 2 and that is on the tunnel 5, and when transmission of the service packet to the CPE 2 is performed, a CPE 2 node decrypts the service packet based on the negotiated key and parses the packet, to obtain data.

In the application scenario in which transmission needs to be performed across a plurality of segments of tunnels, encryption and decryption need to be performed for a plurality of times. This is complex in operations. In addition, computing resources of a network device are consumed, and a forwarding delay of the service packet is increased.

This application provides a method for negotiating an internet protocol security (internet protocol security, IPsec for short) security association (security association, SA), and the method is applied to a wide area network. The IPsec SA is a security protocol used for providing data confidentiality, data integrity, and identity authentication in an IP-based network. The IPsec SA is a set of security parameters established between two network devices, to protect transmission of an IP data packet. The IPsec SA includes an encryption algorithm, an identity authentication protocol, a key length, key management, and another security parameter. Before the IPsec SA is established, the two devices need to negotiate the security parameters, to ensure that the two devices use same security parameters. Once the IPsec SA is established, encryption and identity authentication are performed on the data packet by using the security parameters, to ensure data confidentiality and data integrity.

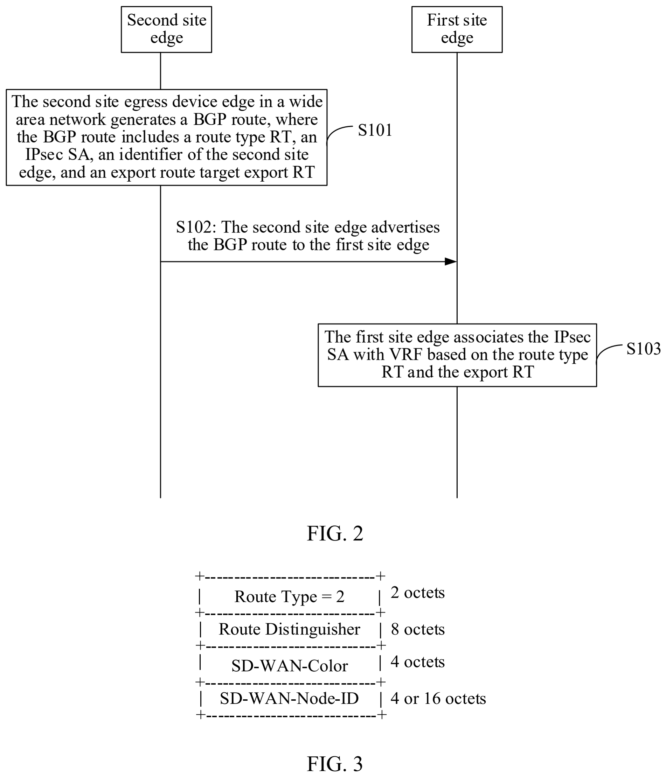

FIG. 2 is a schematic flowchart of a method for negotiating an IPsec SA according to this application. The method includes but is not limited to the following content descriptions.

S101: A second site egress device edge in a wide area network generates a BGP route, where the BGP route includes a route type RT, the IPsec SA, an identifier of the second site edge, and an export route target export RT.

The BGP route includes a route distinguisher (Route Distinguisher, RD) and an export route target (Export Route Target, Export RT for short). The route distinguisher RD identifies virtual routing and forwarding (virtual routing and forwarding, VRF) of the second site edge, and the export route target export RT is used for performing VRF matching of the second site edge.

The BGP route further includes an identifier of the second site edge. In an implementation, the identifier of the second site edge includes a site identifier site ID to which the second site edge belongs and a node identifier node ID of the second site edge. In other words, the edge may be determined by using the site identifier and the node identifier. In another implementation, a node identifier in the wide area network is globally unique. In this case, the identifier of the second site edge may include only the node identifier, that is, the edge may be uniquely determined by using the node identifier. In another implementation, the identifier of the second site edge may be a second site identifier site ID. In this case, any edge of a first site receives a BGP route advertised by any edge of a second site, and the BGP route carries an identifier of the second site and the IPsec SA. This indicates that a key negotiated between the first site and the second site is the IPsec SA, and subsequently, the edge of the first site and the edge of the second site may perform security protection and transmission on a service packet based on the negotiated key IPsec SA.

The BGP route further includes a route type (Route Type, RT) and the IPsec SA. The route type RT indicates that the IPsec SA of the BGP route advertisement is used for performing end-to-end security protection on a service packet in virtual routing and forwarding VRF that matches the export route target export RT. For example, if the VRF that matches the export route target export RT is VRF of a first site edge, the route type RT indicates that the IPsec SA of the BGP route advertisement is used for performing end-to-end security protection on a service packet between the second site edge and the first site edge.

Optionally, the BGP route may be a BGP SD-WAN route, and a sub-address family of the BGP route is an SD-WAN sub-address family; or the BGP route may be a BGP ethernet virtual private network (ethernet virtual private network, EVPN) route, and a sub-address family of the BGP route is an EVPN sub-address family. Alternatively, the BGP route may be another route, and the sub-address family of the BGP route may be another sub-address family. This is not limited in this application.

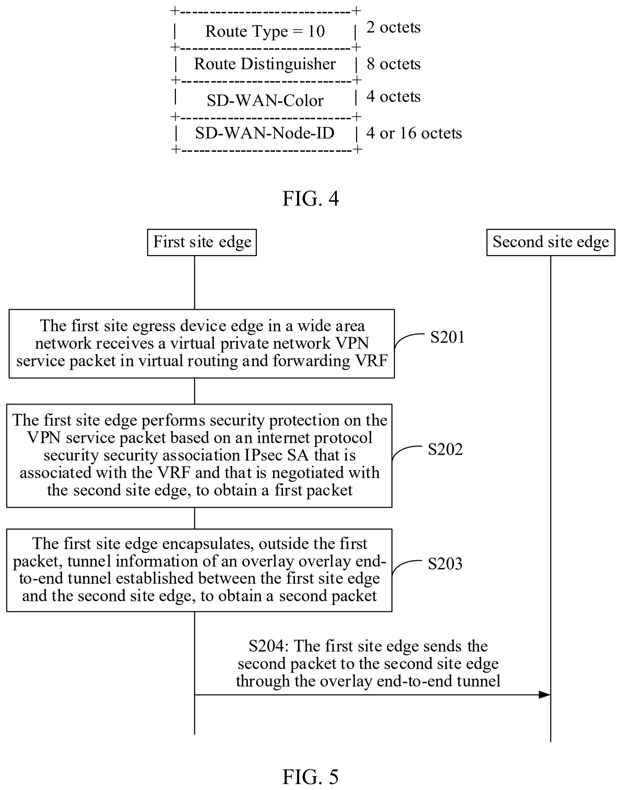

The BGP route includes network layer reachability information (network layer reachability information, NLRI), and the route type RT, the route distinguisher RD, and the identifier of the second site edge are all in the NLRI. For example, FIG. 3 is a diagram of a part of a structure of a BGP SD-WAN route according to this application. In FIG. 3, Route Type indicates the route type RT, and a length of the route type RT may be 2 bytes. In the SD-WAN sub-address family, the route type may be defined as 2. Route Distinguisher indicates the route distinguisher RD, and a length of the route distinguisher RD may be 8 bytes. SD-WAN-Color indicates the site identifier, and a length of the site identifier may be 4 bytes. SD-WAN-Node-ID indicates the node identifier, and a length of the node identifier may be 4 bytes or 16 bytes. For another example, FIG. 4 is a diagram of a part of a structure of a BGP EVPN route according to this application. In FIG. 4, meanings of fields are the same as those of fields in the diagram in FIG. 3. A difference lies in that, in the EVPN sub-address family, the route type RT is defined as 10. It should be noted that, defining the routing type RT as 2 herein is merely an example in the SD-WAN sub-address family. In the SD-WAN address family, another value may alternatively indicate a newly added route type. Defining the routing type RT as 10 is merely an example in the EVPN sub-address family. In the EVPN address family, another value may alternatively indicate a newly added route type. This is not specifically limited in this application.

The BGP route further includes a type-length-value (type-length-value, TLV for short). Specifically, the BGP route includes a tunnel encapsulation attribute (Tunnel Encapsulation Attribute, TEA) TLV, and the TEA TLV includes the IPsec SA, that is, the IPsec SA is carried in a TEA TLV field of the BGP route. Specifically, the IPsec SA is carried in a sub-TLV of the TEA TLV. The BGP route further includes an extended community attribute TLV, and the extended community attribute TLV includes the export route target export RT, that is, the export RT is carried in an extended community attribute TLV field of the BGP route. It should be noted that, positions of the IPsec SA and the export RT herein are used as examples. Alternatively, the IPsec SA and the export RT may be carried in another TLV field of the BGP route. This is not specifically limited in this application.

For example, in the diagram of the wide area network scenario shown in FIG. 1, the second site edge may be CPE 1 or CPE 2.

S102: The second site edge advertises the BGP route to the first site edge.

The second site edge advertises the BGP route in the wide area network. For example, in the wide area network shown in FIG. 1, assuming that the second site edge is the CPE 1, after generating the BGP route, the CPE 1 may reflect the BGP route to an EPOP 1 via a regional route reflector (route reflector, RR), the EPOP 1 reflects the BGP route to a BPOP 1, a BPOP 2, and an EPOP 2 via a managed service provider (managed service provider, MSP) RR, and the EPOP 2 reflects the BGP route to CPE 2 via the regional RR. In this way, the BGP route advertisement is implemented.

The first site edge in the wide area network receives the BGP route advertised by the second site edge. For example, in FIG. 1, if the second site edge is the CPE 1, the first site edge may be CPE 2; or if the second site edge is the CPE 2, the first site edge may be the CPE 1.

S103: The first site edge associates the IPsec SA with the VRF based on the route type RT and the export RT.

The first site edge receives the BGP route advertised by the second site edge, and associates the IPsec SA with the VRF based on the route type RT and the export route target export RT in the BGP route. Specifically, the export RT is used for performing VRF matching of the second site edge, and the route type RT indicates that the IPsec SA of the BGP route advertisement is used for performing end-to-end security protection on the service packet in the VRF that matches the export RT. Therefore, after receiving the BGP route, the first site edge first determines whether the VRF of the first site edge matches the export RT. In a case of matching, the first site edge associates the IPsec SA with the VRF of the first site edge. Because the IPsec SA is also associated with the second site edge, it may be understood that both the VRF of the first site edge and VRF of the second site edge are associated with the IPsec SA. In a case of mismatching, the first site edge is not associated with the IPsec SA.

In an implementation, a matching policy may be set as follows: An import route target and an export route target export RT may be set in each edge in the wide area network. The import route target is locally stored in the edge, and the export route target is carried in the BGP route. A BGP route sent by the second site edge carries the export route target. After receiving the BGP route sent by the second site, the first site edge compares the export route target in the BGP route with an import route target locally stored in the first site edge. If the two route targets are consistent, the VRF of the first site edge matches the export RT in the BGP route, and the first site edge associates the IPsec SA in the BGP route with the VRF of the first site edge. If the two route targets are inconsistent, the VRF of the first site edge does not match the export RT in the BGP route, and the IPsec SA is not associated with the VRF of the first site edge. For example, the export RT carried in the BGP route sent by the second site edge is 100, and the local import route target of the first site edge is 100. After receiving the BGP route, the first site edge compares the export RT with the local import route target. It is determined through comparison that the two route targets are consistent. In this case, the first site edge associates the IPsec SA carried in the BGP route with the VRF of the first site edge. The matching policy herein is merely one of possible implementations, and the matching policy may alternatively be another implementation. This is not limited in this application.

The method in this application may be applied to the wide area network, for example, may be applied to a software-defined wide area network SD-WAN. The first site edge and the second site edge may be site edges in the SD-WAN. The method in this application may alternatively be applied to another wide area network. This is not limited in this application.

During actual application, the first site edge and the second site edge may be determined based on an actual service requirement and a service flow. Both the import route target and an export route target that are of the first site edge and an import route target and the export route target that are of the second site edge may be set based on an actual service requirement.

It may be understood that, through the BGP route advertisement, both the VRF of the first site edge and the VRF of the second site edge are associated with the IPsec SA, that is, the IPsec SA used for transmission of the service packet is negotiated between the first site edge and the second site edge. In this case, when transmission of the service packet is subsequently performed between the first site edge and the second site edge, security protection may be performed on the service packet based on the negotiated IPsec SA, and transmission of a VPN service packet is performed through the virtual routing and forwarding VRF. In this way, end-to-end tunnel transmission between the first site edge and the second site edge is implemented, security protection and decapsulation need to be performed only once, and a transmission delay is reduced.

It can be learned that, this application provides the method for negotiating an IPsec SA. The new route type is added to the BGP route, and the IPsec SA and the export route target are carried in the BGP route. The newly added route type indicates that the IPsec SA of the BGP route advertisement is used for performing end-to-end security protection on the service packet in the VRF that matches the export route target, and the newly added route type implements IPsec SA negotiation based on a VRF granularity. Through the BGP route advertisement, an IPsec SA is negotiated between the first site edge and the second site edge. In this way, when transmission of the service packet is subsequently performed between the first site edge and the second site edge, security protection may be performed on the service packet based on the negotiated IPsec SA, and transmission of the VPN service packet is performed in a virtual routing and forwarding VRF manner.

Based on the method for negotiating an IPsec SA provided above, this application further provides a secure packet transmission method. FIG. 5 is a schematic flowchart of a secure packet transmission method according to this application. The method is applied to a wide area network, and the method includes but is not limited to the following content descriptions.

S201: A first site egress device edge in the wide area network receives a virtual private network VPN service packet in virtual routing and forwarding VRF.

The first site egress device edge in the wide area network receives the VPN service packet in the VRF. The VPN service packet may be delivered by a controller to the first site edge, or may be sent by another network device in the wide area network to the first site edge.

In the diagram of the scenario shown in FIG. 1, the first site edge may be CPE 1 or CPE 2.

S202: The first site edge performs security protection on the VPN service packet based on an internet protocol security security association IPsec SA that is associated with the VRF and that is negotiated with a second site edge, to obtain a first packet.

Through BGP route advertisement, the IPsec SA is negotiated between the first site edge and the second site edge, and both VRF of the first site edge and VRF of the second site edge are associated with the IPsec SA. The IPsec SA is used for performing end-to-end protection on a service packet between the VRF of the first site edge and the VRF of the second site edge. Based on this, after receiving the VPN service packet in the VRF, the first site edge performs security protection on the VPN service packet based on the IPsec SA that is associated with the VRF and that is negotiated with the second site edge, to obtain the first packet.

In an implementation, performing security protection on the VPN service packet includes: performing encapsulating security payload (encapsulating security payload, ESP) protocol encryption on the VPN service packet. In an implementation, performing security protection on the VPN service packet includes: encapsulating an authentication header (Authentication Header, AH) into the VPN service packet. In an implementation, performing security protection on the VPN service packet includes: performing ESP protocol encryption on the VPN service packet and encapsulating an authentication header AH into the VPN service packet. Alternatively, security protection may be performed on the VPN service packet in another manner. This is not limited in this application.

S203: The first site edge encapsulates, outside the first packet, tunnel information of an overlay overlay end-to-end tunnel established between the first site edge and the second site edge, to obtain a second packet.

The first site edge encapsulates, into an outer layer of the first packet, the tunnel information of the overlay overlay end-to-end tunnel established between the first site edge and the second site edge, to obtain the second packet. An underlay underlay tunnel corresponding to the overlay end-to-end tunnel between the first site edge and the second site edge includes a plurality of segments of tunnels. For example, in the diagram of the scenario shown in FIG. 1, if the first site edge is the CPE 1, and the second site edge is the CPE 2, the underlay underlay tunnel corresponding to the overlay end-to-end tunnel between the first site edge and the second site edge includes a tunnel 1 (the CPE 1 to an EPOP 1), a tunnel 2 (the EPOP 1 to a BPOP 1), a tunnel 3 (the BPOP 1 to a BPOP 2), a tunnel 4 (the BPOP 2 to an EPOP 2), and a tunnel 5 (the EPOP 2 to the CPE 2).

The overlay end-to-end tunnel includes at least one point of presence POP, and the tunnel information includes information about the at least one point of presence. In an example, the overlay end-to-end tunnel includes one point of presence POP, which is referred to as a first point of presence POP for ease of description. The first site edge is an ingress endpoint of the overlay end-to-end tunnel, the second site edge is an egress endpoint of the overlay end-to-end tunnel, and the overlay end-to-end tunnel passes through the first point of presence POP. The first point of presence POP may be an EPOP, or may be a BPOP. This is not limited in this application. The tunnel information of the overlay end-to-end tunnel includes first information of the first point of presence.

In another example, the overlay end-to-end tunnel includes a plurality of points of presence POPs, the plurality of points of presence POPs include a first point of presence POP and a second point of presence POP, the first site edge is an ingress endpoint of the overlay end-to-end tunnel, the second site edge is an egress endpoint of the overlay end-to-end tunnel, the first site edge accesses the wide area network via the first POP, and the second site edge accesses the wide area network via the second POP. For example, in the diagram of the scenario shown in FIG. 1, if the first site edge is the CPE 1, and the second site edge is CPE 2, the overlay end-to-end tunnel between the first site edge and the second site edge includes the plurality of points of presence, the first site edge accesses the wide area network via the EPOP 1, and the second site edge accesses the wide area network via the EPOP 2. In this case, the EPOP 1 is the first POP, and the EPOP 2 is the second POP. The tunnel information of the overlay end-to-end tunnel includes the first information of the first point of presence and second information of the second point of presence.

In an implementation, the overlay end-to-end tunnel is a segment routing over internet protocol version 6 (internet protocol version 6, IPv6) SRv6 tunnel. In this case, the first site edge encapsulates tunnel information of the SRv6 tunnel into an outer layer of the first packet, to obtain a second packet. The second packet includes an IPv6 header and a segment routing header (segment routing header, SRH). When the overlay end-to-end tunnel includes the first point of presence and the second point of presence, a destination address of the IPv6 header points to the first point of presence, and the SRH includes the first information and the second information.

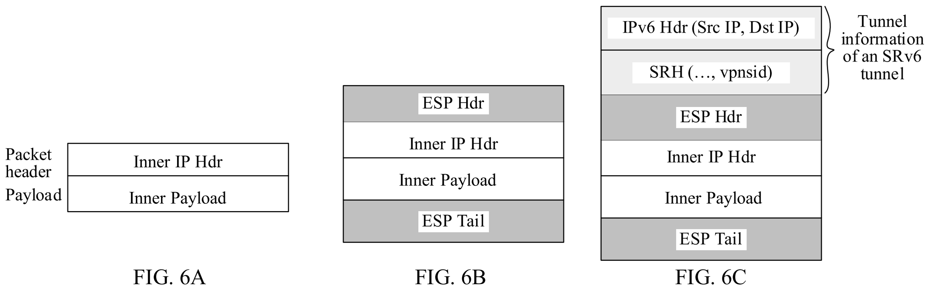

For example, FIG. 6A to FIG. 6C are example diagrams according to this application. FIG. 6A shows a VPN service packet, including a packet header Inner IP Hdr and a payload Inner Payload. FIG. 6B shows a first packet. The first packet is obtained by performing ESP protocol encryption on the VPN service packet. FIG. 6C shows a second packet. The second packet is obtained by encapsulating the tunnel information of the SRv6 tunnel between the first site edge and the second site edge into an outer layer of the first packet, IPv6 Hdr (Src IP, Dst IP) indicates an IPv6 packet header, and SRH (..., vpnsid) indicates a segment routing header SRH. The IPv6 packet header and the SRH form a part of the tunnel information of the overlay end-to-end tunnel.

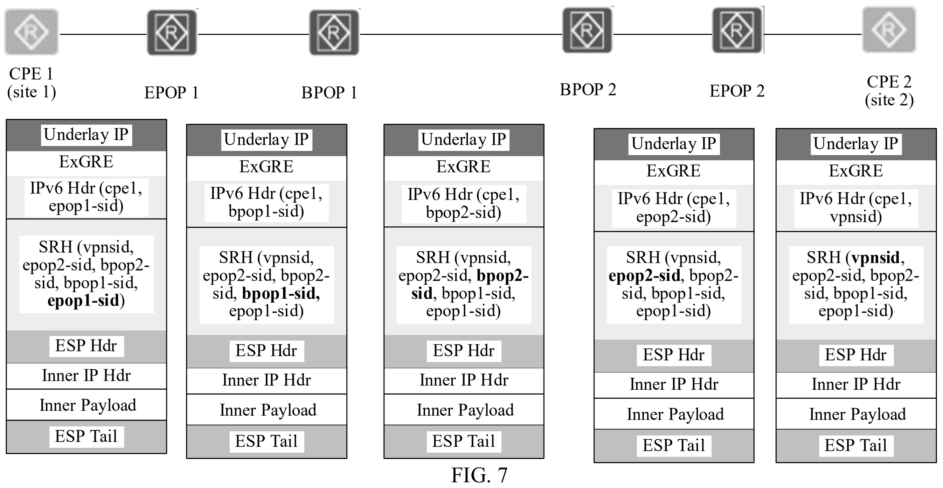

For another example, in the diagram of the scenario shown in FIG. 1, it is assumed that the CPE 1 is the first site edge, the CPE 2 is the second site edge, and the overlay end-to-end tunnel between the CPE 1 and the CPE 2 is the SRv6 tunnel. In this case, the CPE 1 encapsulates the tunnel information of the SRv6 tunnel between the CPE 1 and the CPE 2 into an outer layer of the first packet, to obtain the second packet. FIG. 7 is a diagram according to this application. At the CPE 1, in the second packet, IPv6 Hdr (cpe1, epop1-sid) is the IPv6 packet header, and SRH (vpnsid, epop2-sid, bpop2-sid, bpop1-sid, epop1-sid) is the segment routing header SRH. epop1-sid indicates a first endpoint segment identifier END.SID of the CPE 1, bpop1-sid indicates a first endpoint segment identifier END.SID of the BPOP 1, bpop2-sid indicates a first endpoint segment identifier END.SID of the BPOP 2, and epop2-sid indicates a first endpoint segment identifier END.SID of the EPOP 2. vpnsid is generated by the CPE 2 during the BGP route advertisement, and vpnsid is associated with VRF of the CPE 2. The EPOP 1 is the first point of presence POP, and the first endpoint segment identifier epop1-sid of the EPOP 1 is the first information of the first point of presence POP. The EPOP 2 is the second point of presence POP, and the first endpoint segment identifier epop2-sid of the EPOP 2 is the second information of the second point of presence POP. An operation associated with the first endpoint segment identifier epop1-sid of the EPOP 1 includes: matching an overlay SRv6 policy from the first POP to the second POP based on a next-hop SID of epop1-sid. An operation associated with the segment identifier END.SID can be learned from a packet at each POP shown in FIG. 7.

An overlay overlay network is established based on an underlay underlay network. When transmission of the second packet is performed through the overlay end-to-end tunnel, transmission of the second packet is actually performed in the underlay underlay network, but the overlay overlay network does not sense how transmission of the packet is performed in the underlay underlay network. Therefore, tunnel information of the underlay tunnel needs to be encapsulated into an outer layer of the second packet, and transmission of the packet encapsulated with the tunnel information of the underlay tunnel is performed through the overlay end-to-end tunnel (where actually, transmission of the packet encapsulated with the tunnel information of the underlay tunnel is performed through the underlay underlay tunnel). For example, in the scenario shown in FIG. 1, because the wide area network is an SD-wide area network WAN, the packet needs to traverse a carrier network during the transmission, and a device in the carrier network cannot identify an overlay overlay IPv6 address. Therefore, a packet header underlay IP of the underlay underlay tunnel is encapsulated into the outer layer.

In an implementation, if the overlay end-to-end tunnel is a segment routing multi-protocol label switching traffic engineering (segment routing multi-protocol label switching traffic engineering, SR-MPLS TE) policy, the second packet includes an MPLS label stack, and the MPLS label stack includes the first information of the first POP and the second information of the second POP. The first information is a first node SID of the first POP, and an operation associated with the first node SID includes: matching an overlay overlay SR MPLS tunnel from the first POP to the second POP based on a next-hop SID of the first node SID in the label stack.

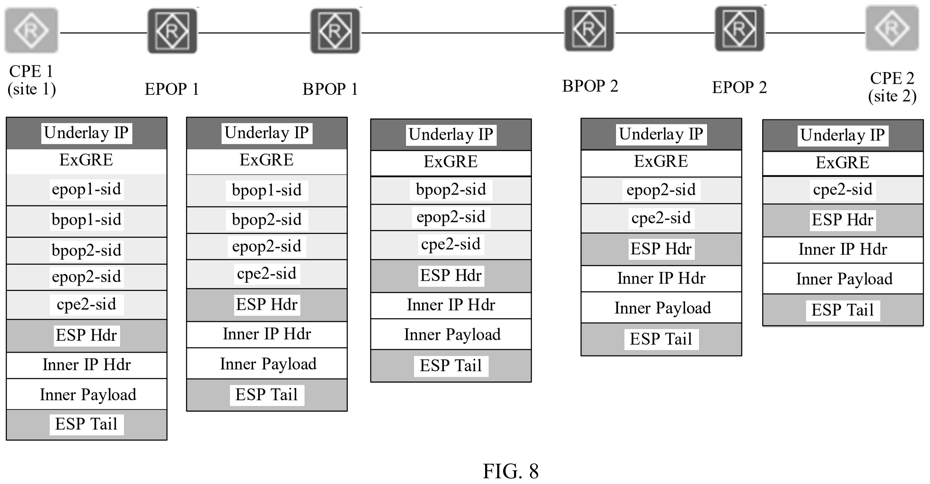

For example, in the diagram of the scenario shown in FIG. 1, it is assumed that the CPE 1 is the first site edge, the CPE 2 is the second site edge, and the overlay end-to-end tunnel between the CPE 1 and the CPE 2 is the SR-MPLS TE policy. In this case, the CPE 1 encapsulates SR-MPLS TE policy information between the CPE 1 and the CPE 2 into an outer layer of the first packet, to obtain the second packet. FIG. 8 is a diagram according to this application. At the CPE 1, in the second packet, (epop1-sid, bpop1-sid, bpop2-sid, epop2-sid, cpe2-sid) indicates the tunnel information of the overlay end-to-end tunnel, namely, the MPLS label stack. epop1-sid indicates a first node SID of the EPOP 1, bpop1-sid indicates a first node SID of the BPOP 1, bpop2-sid indicates a first node SID of the BPOP 2, epop2-sid indicates a first node SID of the EPOP 2, and cpe2-sid indicates a first node SID of the CPE 2. The EPOP 1 is the first point of presence POP, and the first node segment identifier epop1-sid of the EPOP 1 is the first information of the first point of presence POP. The EPOP 2 is the second point of presence POP, and the first node segment identifier epop2-sid of the EPOP 2 is the second information of the second point of presence POP. An operation associated with the first node SID includes: matching an overlay overlay SR MPLS tunnel from the first POP to the second POP based on a next-hop SID of the first node SID in the label stack. The operation associated with the node segment identifier SID can be learned from a packet at each POP shown in FIG. 8. An underlay IP in the packet shown in FIG. 8 is the tunnel information of the underlay tunnel.

In another implementation, if the overlay end-to-end tunnel is an SRv6 tunnel, tunnel encapsulation may be performed on the second packet based on a generic network virtualization encapsulation (generic network virtualization encapsulation, GENEVE) protocol, and the second packet is encapsulated based on SRv6 in GENEVE. For example, the second packet includes an outer IP header, a user datagram protocol (user datagram protocol, UDP) header, GENEVE encapsulation, an SRH, an ESP, and a payload, where the payload includes the foregoing VPN service packet, the GENEVE encapsulation includes a VPN identifier of a VPN service carried by the VPN service packet. In an example, a metadata field may be further included between the SRH and the ESP, and is used for carrying service intent information. Certainly, the second packet may alternatively be encapsulated based on SRv6 over GENEVE. SRv6 over GENEVE encapsulation differs from SRv6 in GENEVE encapsulation in that an IPv6 header is further included between the GENEVE encapsulation and the SRH, and the SRv6 over GENEVE encapsulation has higher encapsulation overheads than the SRv6 in GENEVE encapsulation. However, the SRv6 over GENEVE encapsulation complies with a standard SRv6 encapsulation format.

In another implementation, the overlay end-to-end tunnel is a tunnel encapsulated based on a generic routing encapsulation (generic routing encapsulation, GRE) protocol, and the second packet is encapsulated based on SRv6 over GRE. In an example, the second packet includes an outer IP header, a UDP header, outer layer GRE encapsulation, an IPv6 header, an SRH, inner layer GRE encapsulation, an ESP, and a payload, where the payload includes the foregoing VPN service packet, the inner layer GRE encapsulation includes a VPN identifier of a VPN service carried by the VPN service packet. The VPN identifier is carried in the inner layer GRE encapsulation. When transmission of the second packet is performed in the network, an intermediate node through which the overlay end-to-end tunnel passes does not parse the VPN identifier (VPN identifier, VNI), that is, the intermediate node does not sense a VPN. In an example, a metadata field may be further included between the SRH and the inner layer GRE encapsulation, and is used for carrying service intent information.

The service intent information in this embodiment of this application may include one or more types of information indicating a service intent. In an example, the service intent information may include a quality of service parameter, and the quality of service parameter includes but is not limited to one or more of parameters, such as a delay, a packet loss, jitter, bandwidth utilization, and a bit error rate. In another example, the service intent parameter may include gateway constraint information that needs to be satisfied by an end-to-end path from a site edge 1 to a site edge 2, and the gateway constraint information includes but is not limited to a gateway that needs to pass through and/or a gateway that needs to bypass.

S204: The first site edge sends the second packet to the second site edge through the overlay end-to-end tunnel.

The first site edge sends the second packet to the second site edge through the overlay end-to-end tunnel. In a possible implementation, the first site edge sends the second packet to the second site edge through the SRv6 tunnel or the SR-MPLS TE policy.

It should be noted that, each point of presence POP between the first site edge and the second site edge does not sense the second packet, does not decrypt the second packet, and forwards the second packet only based on the tunnel information of the overlay end-to-end tunnel, until the second packet arrives at the second site edge. Therefore, in a transmission process of the service packet, security protection needs to be performed only once at the first site edge, and other points of presence POPs do not need to perform decryption. In this way, consumption of computing resources is reduced, forwarding efficiency is improved, and a transmission delay is reduced.

The secure packet transmission method provided in this embodiment may be applied to an SD-WAN, and the first site edge and the second site edge are site edges in the SD-WAN. The method may alternatively be applied to another wide area network. This is not limited in this application.

In the solution of this application, a new route type RT is added to the BGP route. The BGP route carries the IPsec SA and the export route target export RT. The newly added route type RT indicates that the IPsec SA of the BGP route advertisement is used for performing end-to-end security protection on the service packet in the VRF that matches the export RT. The BGP route is advertised in the wide area network, so that end-to-end IPsec SA negotiation between two site edges is implemented based on a VRF granularity. In this way, transmission of the VPN service packet is subsequently performed by using the negotiated IPsec SA. This lays a foundation for the transmission of the VPN service packet. In comparison with existing IPsec SA negotiation based on a TNP granularity, each point of presence POP between the first site edge and the second site edge does not sense an inner layer VPN service packet. End-to-end encryption and decryption between the two site edges are performed once, so that the consumption of the computing resources is reduced, the forwarding efficiency is improved, and the transmission delay is reduced.

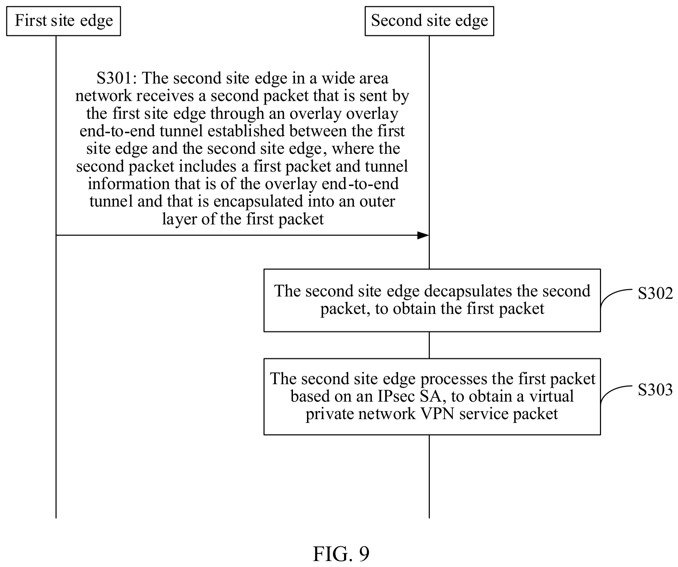

Based on the method for negotiating an IPsec SA and the secure packet transmission method, this application further provides a secure packet transmission method. FIG. 9 is a schematic flowchart of a secure packet transmission method according to this application. The method includes but is not limited to the following content descriptions.

S301: A second site edge in a wide area network receives a second packet that is sent by a first site edge through an overlay overlay end-to-end tunnel established between the first site edge and the second site edge, where the second packet includes a first packet and tunnel information that is of the overlay end-to-end tunnel and that is encapsulated into an outer layer of the first packet.

The secure packet transmission method provided in this embodiment may be applied to an SD-WAN, and the first site edge and the second site edge are site edges in the SD-WAN. The method may alternatively be applied to another wide area network. This is not limited in this application.

A second site egress device edge receives the second packet that is sent by the first site edge through the overlay overlay end-to-end tunnel established between the first site edge and the second site edge. An underlay underlay tunnel corresponding to the overlay overlay end-to-end tunnel established between the first site edge and the second site edge includes a plurality of segments of tunnels. For example, refer to the diagram of the scenario shown in FIG. 1. The first site edge may be CPE 1, and the second site edge may be CPE 2; or the first site edge may be CPE 2, and the second site edge may be CPE 1. An underlay underlay tunnel corresponding to an overlay end-to-end tunnel established between the CPE 1 and the CPE 2 includes a plurality of segments of tunnels, and specifically includes: a tunnel 1 (the CPE 1 to an EPOP 1), a tunnel 2 (the EPOP 1 to a BPOP 1), a tunnel 3 (the BPOP 1 to a BPOP 2), a tunnel 4 (the BPOP 2 to an EPOP 2), and a tunnel 5 (the EPOP 2 to the CPE 2).

The overlay end-to-end tunnel includes at least one point of presence POP, and the tunnel information includes information about the at least one point of presence. In an example, if the overlay end-to-end tunnel includes one first point of presence POP, the tunnel information includes first information of the first point of presence. In another example, the overlay end-to-end tunnel includes a plurality of points of presence POPs, and the plurality of points of presence POPs include a first point of presence POP and a second point of presence POP. In this case, the tunnel information includes first information of the first point of presence and second information of the second point of presence. The first site edge is an ingress endpoint of the overlay end-to-end tunnel, the second site edge is an egress endpoint of the overlay end-to-end tunnel, the first site edge accesses the wide area network via the first POP, and the second site edge accesses the wide area network via the second POP.

In an implementation, the overlay end-to-end tunnel is an SRv6 tunnel, and the second site edge receives a second packet that is sent by the first site edge through the SRv6 tunnel, where the second packet includes the first packet and tunnel information that is of the SRv6 tunnel and that is encapsulated into the outer layer of the first packet. The first packet is a packet obtained by performing security protection on a VPN service packet based on an IPsec SA negotiated between the second site edge and the first site edge, the tunnel information of the SRv6 tunnel includes an IPv6 header and a segment routing header SRH, a destination address of the IPv6 header points to the first POP, and the SRH header includes the first information and the second information. For formats of the service packet, the first packet, and the second packet, refer to diagrams shown in FIG. 6A to FIG. 6C. For brevity of the specification, details are not described herein again.

In an implementation, the overlay end-to-end tunnel is an SR-MPLS TE policy, and the second packet includes the first packet and SR-MPLS TE policy information encapsulated into the outer layer of the first packet. The SR-MPLS TE policy information includes an MPLS label stack, and the MPLS label stack includes the first information of the first POP and the second information of the second POP. For a format of the second packet, refer to descriptions in the foregoing method embodiments. For brevity of the specification, details are not described herein again.

In a possible implementation, the second packet may further include a packet header of the underlay underlay tunnel. For example, in the SD-WAN scenario shown in FIG. 1, the packet needs to traverse a carrier network during transmission, and a device in the carrier network cannot identify an overlay overlay IPv6 address. Therefore, a packet header underlay IP of the underlay underlay tunnel is encapsulated into the outer layer.

S302: The second site edge decapsulates the second packet, to obtain the first packet.

The second site edge decapsulates the second packet, to obtain the first packet. In an implementation, the overlay end-to-end tunnel is the SRv6 tunnel, and the second packet includes the first packet and the tunnel information of the SRv6 tunnel. In this case, the second site edge decapsulates the second packet, and removes the tunnel information of the SRv6 tunnel, to obtain the first packet. A diagram of the format of the first packet is shown in FIG. 6B. Details are not described herein again.

In an implementation, the overlay end-to-end tunnel is the SR-MPLS TE policy, and the second packet includes the first packet and the SR-MPLS TE policy information encapsulated into the outer layer of the first packet. In this case, the second site edge decapsulates the second packet, and removes tunnel information of an MPLS SR-TE tunnel, to obtain the first packet. A diagram of the format of the first packet is shown in FIG. 6B. Details are not described herein again.

In an implementation, the overlay end-to-end tunnel is a tunnel encapsulated based on a GENEVE protocol, and the second packet is encapsulated based on SRv6 in GENEVE. In this case, the second site edge decapsulates the second packet, and removes a packet header encapsulated based on the SRv6 in GENEVE, to obtain the first packet. A diagram of the format of the first packet is shown in FIG. 6B. Details are not described herein again.

In another implementation, the overlay end-to-end tunnel is a tunnel encapsulated based on a GRE protocol, and the second packet is encapsulated based on SRv6 over GRE. In this case, the second site edge decapsulates the second packet, and removes a packet header encapsulated based on the SRv6 over GRE, to obtain the first packet. A diagram of the format of the first packet is shown in FIG. 6B. Details are not described herein again.

S303: The second site edge processes the first packet based on the IPsec SA, to obtain the virtual private network VPN service packet.

In an implementation, the second site edge performs ESP protocol processing on the first packet based on the IPsec SA, to obtain the VPN service packet. In an implementation, the second site edge performs authentication on the first packet based on the IPsec SA and authentication data carried in an authentication header AH of the first packet, to obtain the VPN service packet. In an implementation, the second site edge performs ESP protocol decryption on the first packet based on the IPsec SA, and performs authentication on the first packet based on the IPsec SA and authentication data carried in an authentication header AH of the first packet, to obtain the VPN service packet.

It should be noted that, the first site edge may generate a BGP route and advertise the BGP route to the second site edge; or the second site edge may generate a BGP route and advertise the BGP route to the first site edge. Both VRF of the first site edge and VRF of the second site edge may be associated with the IPsec SA in both manners. After the VRF of the first site edge and the VRF of the second site edge are associated with the IPsec SA in either of the both manners, the first site edge may perform security protection and encapsulation on the VPN service packet based on the negotiated IPsec SA, and then send the VPN service packet to the second site edge. The second site edge performs decapsulation and decryption based on the negotiated IPsec SA, to obtain the VPN service packet.

It can be learned that, this application provides the secure packet transmission method. Through the BGP route advertisement, the IPsec SA is negotiated between the first site edge and the second site edge, and the IPsec SA is associated with the VRF of the first site edge and the VRF of the second site edge. When transmission of the VPN service packet is performed in a scenario of crossing a plurality of tunnels, security protection only needs to be performed on the VPN service packet at the first site edge based on the negotiated IPsec SA, to obtain the first packet. Then, the tunnel information of the overlay end-to-end tunnel established between the first site edge and the second site edge is encapsulated into an outer layer of the first packet, to obtain the second packet, and the second packet is sent to the second site edge through the overlay end-to-end tunnel.

In an entire scenario of transmission across a plurality of underlay tunnels, IPsec SA-based security protection needs to be performed only once at the first site edge, and IPsec SA processing needs to be performed only once at the second site edge. Each point of presence passing through the middle does not need to encrypt or decrypt the packet, and only needs to forward the packet based on the tunnel information. Therefore, according to this embodiment of this application, consumption of computing resources of a network node is reduced, forwarding efficiency is improved, and a transmission delay is reduced.

The foregoing provides descriptions of the method embodiments provided in this application, and the following provides apparatus embodiments that correspond to the method embodiments and that are provided in embodiments of this application.

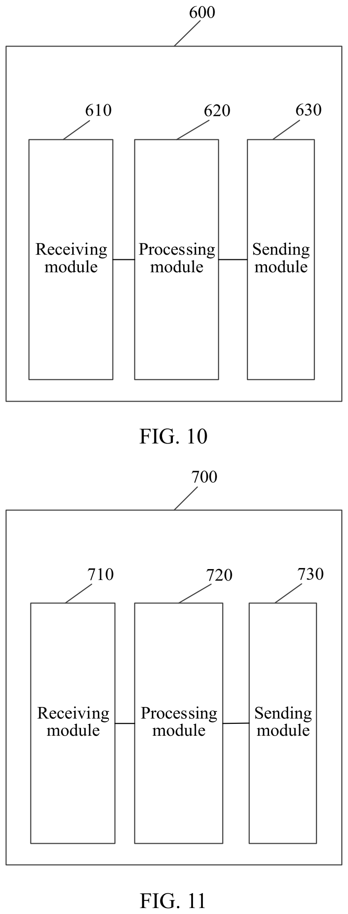

FIG. 10 is a diagram of a structure of a secure packet transmission apparatus 600 according to an embodiment of this application. The secure packet transmission apparatus 600 may be configured as a first site edge in a wide area network, and the apparatus 600 includes:
a receiving module 610, configured to: receive a virtual private network VPN service packet in virtual routing and forwarding VRF;
a processing module 620, configured to: perform security protection on the VPN service packet based on an internet protocol security security association IPsec SA that is associated with the VRF and that is negotiated with a second site edge, to obtain a first packet, where
the processing module 620 is further configured to: encapsulate, into an outer layer of the first packet, tunnel information of an overlay overlay end-to-end tunnel established between the first site edge and the second site edge, to obtain a second packet, where an underlay underlay tunnel corresponding to the overlay end-to-end tunnel includes a plurality of segments of tunnels, the tunnel information includes first information of a first point of presence POP, the first site edge is an ingress endpoint of the overlay end-to-end tunnel, the second site edge is an egress endpoint of the overlay end-to-end tunnel, and the overlay end-to-end tunnel passes through the first POP; and
a sending module 630, configured to: send the second packet to the second site edge through the overlay end-to-end tunnel.

In a possible implementation, the processing module 620 is configured to: perform encapsulating security payload ESP protocol encryption on the VPN service packet; and/or encapsulate an authentication header authentication header into the VPN service packet.

In a possible implementation, the tunnel information further includes second information of a second POP, the overlay end-to-end tunnel passes through the first POP and the second POP, the first site edge accesses the wide area network via the first POP, and the second site edge accesses the wide area network via the second POP.

In a possible implementation, the overlay end-to-end tunnel is a segment routing over internet protocol version 6 IPv6 SRv6 tunnel, the second packet includes an IPv6 header and a segment routing header SRH, a destination address of the IPv6 header points to the first POP, and the SRH includes the first information and the second information.

In a possible implementation, the first information is a first endpoint segment identifier END.SID of the first POP, and an operation associated with the first endpoint segment identifier END.SID includes: matching an overlay overlay SRv6 policy between the first POP and the second POP based on a next-hop SID of the END.SID.

In a possible implementation, the overlay end-to-end tunnel is an SR-MPLS TE policy, the second packet includes an MPLS label stack, and the MPLS label stack includes the first information and the second information.

In a possible implementation, the first information is a first node SID of the first POP, and an operation associated with the first node SID includes: matching an overlay overlay SR MPLS tunnel from the first POP to the second POP based on a next-hop SID of the first node SID in the label stack.

In a possible implementation, the overlay end-to-end tunnel is a tunnel encapsulated based on a generic network virtualization encapsulation GENEVE protocol, and the second packet is encapsulated based on SRv6 in GENEVE.

In a possible implementation, the overlay end-to-end tunnel is a tunnel encapsulated based on a generic routing encapsulation GRE protocol, and the second packet is encapsulated based on SRv6 over GRE.

In a possible implementation, the receiving module 610 is further configured to: receive a border gateway protocol BGP route advertised by the second site edge, where the BGP route includes a route type RT, the IPsec SA, an identifier of the second site edge, and an export route target export RT, where the route type RT indicates that the IPsec SA of the BGP route advertisement is used for performing end-to-end security protection on the VPN service packet in the virtual routing and forwarding VRF that matches the export RT; and the processing module 620 is further configured to: associate the IPsec SA with the VRF based on the route type RT and the export RT.

In a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

In a possible implementation, the identifier of the second site edge includes a site identifier site ID to which the second site edge belongs and/or a node identifier node ID of the second site edge.

In a possible implementation, the BGP route includes network layer reachability information NLRI, and the NLRI includes the route type RT and the identifier of the second site edge.

In a possible implementation, the BGP route includes a tunnel encapsulation attribute type-length-value tunnel encapsulation attribute TLV, and the tunnel encapsulation attribute TLV includes the IPsec SA.

In a possible implementation, the BGP route includes an extended community attribute, and the extended community attribute is used for carrying the export RT.

In a possible implementation, the first site edge and the second site edge are site edges in a software-defined wide area network SD-WAN.

The secure packet transmission apparatus 600 may be configured to implement the method embodiment corresponding to FIG. 5, namely, the method embodiment corresponding to a transmit side of a data forwarding plane, and may be further configured to implement method steps performed by the first site edge in the method embodiment in FIG. 2, namely, the method embodiment corresponding to a receive side of a control plane. For details, refer to descriptions of specific content of the method embodiment in FIG. 2 or FIG. 5. For brevity of the specification, details are not described herein again. When the secure packet transmission apparatus 600 is configured to implement the method embodiment corresponding to the receive side of the control plane, the secure packet transmission apparatus 600 may also be referred to as an apparatus for negotiating an IPsec SA.

It may be understood that, in FIG. 10, division of functional modules and corresponding steps performed by the functional modules are merely examples. In another embodiment, the apparatus 600 may be further divided into more or fewer functional modules based on specific execution steps.

FIG. 11 is a diagram of a structure of another secure packet transmission apparatus 700 according to an embodiment of this application. The secure packet transmission apparatus 700 may be configured as a second site edge in a wide area network, and the apparatus 700 includes:
a receiving module 710, configured to: receive a second packet that is sent by a first site edge through an overlay overlay end-to-end tunnel established between the first site edge and the second site edge, where the second packet includes a first packet and tunnel information that is of the overlay end-to-end tunnel and that is encapsulated into an outer layer of the first packet, an underlay underlay tunnel corresponding to the overlay end-to-end tunnel includes a plurality of segments of tunnels, the tunnel information includes first information of a first point of presence POP, the first site edge is an ingress endpoint of the overlay end-to-end tunnel, the second site edge is an egress endpoint of the overlay end-to-end tunnel, the overlay end-to-end tunnel passes through the first POP, and the first packet is a packet obtained by performing security protection on a virtual private network VPN service packet based on an internet protocol security security association IPsec SA negotiated between the second site edge and the first site edge; and
a processing module 720, configured to: decapsulate the second packet, to obtain the first packet, where
the processing module 720 is configured to: process the first packet based on the IPsec SA, to obtain the VPN service packet.

In a possible implementation, the processing module 720 is configured to: perform encapsulating security payload ESP protocol decryption on the first packet based on the IPsec SA; and/or perform authentication on the first packet based on the IPsec SA and authentication data carried in an authentication header authentication header of the first packet.

In a possible implementation, the tunnel information further includes second information of a second POP, the overlay end-to-end tunnel passes through the first POP and the second POP, the first site edge accesses the wide area network via the first POP, and the second site edge accesses the wide area network via the second POP.

In a possible implementation, the overlay end-to-end tunnel is a segment routing over internet protocol version 6 IPv6 SRv6 tunnel, the second packet includes an IPv6 header and a segment routing header SRH, a destination address of the IPv6 header points to the first POP, and the SRH header includes the first information and the second information.

In a possible implementation, the first information is a first endpoint segment identifier END.SID of the first POP, and an operation associated with the first endpoint segment identifier END.SID includes: matching an overlay overlay SRv6 policy between the first POP and the second POP based on a next-hop SID of the END.SID.

In a possible implementation, the overlay end-to-end tunnel is a segment routing multi-protocol label switching traffic engineering policy SR-MPLS TE policy, the second packet includes an MPLS label stack, and the MPLS label stack includes the first information and the second information.

In a possible implementation, the first information is a first node SID of the first POP, and an operation associated with the first node SID includes: matching an overlay overlay SR MPLS tunnel from the first POP to the second POP based on a next-hop SID of the first node SID in the label stack.

In a possible implementation, the overlay end-to-end tunnel is a tunnel encapsulated based on a generic network virtualization encapsulation GENEVE protocol, and the second packet is encapsulated based on SRv6 in GENEVE.

In a possible implementation, the overlay end-to-end tunnel is a tunnel encapsulated based on a generic routing encapsulation GRE protocol, and the second packet is encapsulated based on SRv6 over GRE.

In a possible implementation,
the processing module 720 is configured to: generate a border gateway protocol BGP route, where the BGP route includes a route type RT, the IPsec SA, an identifier of the second site edge, and an export route target export RT, where the route type RT indicates that the IPsec SA of the BGP route advertisement is used for performing end-to-end security protection on the VPN service packet in virtual routing and forwarding VRF that matches the export RT; and
a sending module 730 is configured to: advertise the BGP route to the first site edge by the second site edge.

In a possible implementation, the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

In a possible implementation, the identifier of the second site edge includes a site identifier site ID to which the second site edge belongs and/or a node identifier node ID of the second site edge.

In a possible implementation, the BGP route includes network layer reachability information NLRI, and the NLRI includes the route type RT and the identifier of the second site edge.

In a possible implementation, the BGP route includes a tunnel encapsulation attribute type-length-value tunnel encapsulation attribute TLV, and the tunnel encapsulation attribute TLV includes the IPsec SA.

In a possible implementation, the BGP route includes an extended community attribute, and the extended community attribute is used for carrying the export RT.

In a possible implementation, the first site edge and the second site edge are site edges in a software-defined wide area network SD-WAN.

The secure packet transmission apparatus 700 may be configured to implement the method embodiment corresponding to FIG. 9, namely, the method embodiment corresponding to a receive side of a data forwarding plane, and may be further configured to implement method steps performed by the second site edge in the method embodiment corresponding to FIG. 2, namely, the method embodiment corresponding to a transmit side of a control plane. For details, refer to descriptions of specific content of the method embodiment in FIG. 2 or FIG. 9. For brevity of the specification, details are not described herein again. When the secure packet transmission apparatus 700 is configured to implement the method embodiment corresponding to the transmit side of the control plane, the secure packet transmission apparatus 700 may also be referred to as an apparatus for negotiating an IPsec SA.

It may be understood that, in FIG. 11, division of functional modules and corresponding steps performed by the functional modules are merely examples. In another embodiment, the apparatus 700 may be further divided into more or fewer functional modules based on specific execution steps.

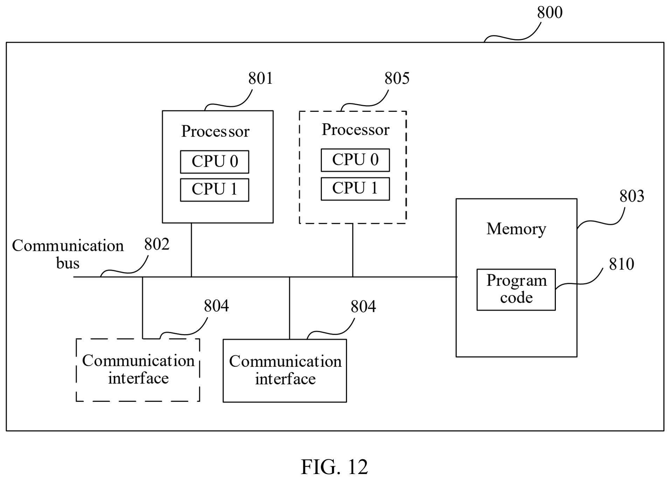

FIG. 12 is a diagram of a structure of a network device 800 according to this application. The network device 800 may be configured as a first site edge in a wide area network, or may be configured as a second site edge in a wide area network. The network device 800 may be implemented by a general bus architecture.

The network device 800 includes at least one processor 801, a memory 803, and at least one communication interface 804.

The processor 801 may be a general-purpose CPU, an NP, or a microprocessor, or may be one or more integrated circuits configured to implement the solutions of this application, such as an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The network device 800 may further include a communication bus 802 configured to transmit information between components. The communication bus 802 may be classified into an address bus, a data bus, a control bus, or the like. For ease of representation, only one thick line is used for representing the bus in FIG. 12, but this does not mean that there is only one bus or only one type of bus.

The memory 803 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile optical disc, a Blu-ray disc, and the like), a magnetic disk storage medium or another magnetic storage device, or any other medium that can be configured to carry or store program code in form of instruction or a data structure and that can be accessed by a computer. However, this is not limited thereto. The memory 803 may exist independently, and is connected to the processor 801 through the communication bus 802; or the memory 803 may be integrated with the processor 801.

The communication interface 804 is configured to communicate with another device or a communication network. The communication interface 804 may include a wired communication interface, or may include a wireless communication interface. The wired communication interface may be, for example, an ethernet interface. The ethernet interface may be an optical interface, an electrical interface, or a combination thereof. The wireless communication interface may be a wireless local area network (wireless local area network, WLAN) interface, a cellular network communication interface, a combination thereof, or the like.

During specific implementation, in an embodiment, the processor 801 may include one or more CPUs, such as a CPU 0 and a CPU 1 shown in FIG. 12.

During specific implementation, in an embodiment, the network device 800 may include a plurality of processors, such as the processor 801 and a processor 805 shown in FIG. 12. Each of the processors may be a single-core processor (single-CPU), or may be a multi-core processor (multi-CPU). The processor herein may be one or more devices, circuits, and/or processing cores configured to process data (for example, computer program instructions).

In some embodiments, the memory 803 is configured to store program code 810 in the solutions of this application, and the processor 801 is configured to execute the program code 810 stored in the memory 803. In other words, the network device 800 may implement, by using the processor 801 and the program code 810 in the memory 803, the method provided in the method embodiment in FIG. 2, FIG. 5, or FIG. 9.

The network device 800 in this embodiment of this application may correspond to the first site edge or the second site edge in the foregoing method embodiments. In addition, the processor 801, the communication interface 804, and the like in the network device 800 may implement functions of the device and/or steps and the methods implemented by the device in the foregoing method embodiments. For brevity, details are not described herein again.

When the network device 800 is configured as the first site edge, the network device 800 corresponds to the foregoing secure packet transmission apparatus 600. In this case, the receiving module 610 and the sending module 630 in the secure packet transmission apparatus 600 may be located in the communication interface 804 in the network device 800; and the processing module 620 may be located in the processor 801 or the processor 805 in the network device 800.

When the network device 800 is configured as the second site edge, the network device 800 corresponds to the foregoing secure packet transmission apparatus 700. In this case, the receiving module 710 and the sending module 730 in the secure packet transmission apparatus 700 may be located in the communication interface 804 in the network device 800; and the processing module 720 may be located in the processor 801 or the processor 805 in the network device 800.

Hardware, modules, and the foregoing other operations and/or functions in the network device 800 are respectively for implementing steps and methods implemented by the secure packet transmission apparatus 600 or the secure packet transmission apparatus 700. For details about how the network device 800 implements packet processing and other detailed procedures, refer to the foregoing method embodiments. For brevity of the specification, details are not described herein again.

Steps in FIG. 2, FIG. 5, or FIG. 9 are completed by using an integrated logic circuit of hardware in the processor of the network device 800 or by using instructions in a form of software. The methods and steps disclosed with reference to embodiments of this application may be directly performed and completed by a hardware processor, or may be performed and completed by using a combination of hardware in the processor and a software module (software unit). The software module may be located in one or more mature storage media in the art, such as a random access memory, a flash memory, a read-only memory, a programmable read-only memory, an electrically erasable programmable memory, or a register. The storage medium is located in the memory, and the processor reads information in the memory and performs the steps in the foregoing methods in combination with hardware. For brevity of the specification, details are not described herein again.

An embodiment of this application further provides a system. The system includes a first site edge and a second site edge. The first site edge may be the foregoing secure packet transmission apparatus 600 or the foregoing network device 800. The second site edge may be the foregoing secure packet transmission apparatus 700 or the foregoing network device 800. The first site edge may be configured to implement the method embodiment in FIG. 2 or FIG. 5, and the second site edge may be configured to implement the method embodiment in FIG. 2 or FIG. 9. For details, refer to descriptions of the method embodiment in FIG. 2, FIG. 5, or FIG. 9. Details are not described herein again.

An embodiment of this application further provides a computer storage medium, including program instructions. When the program instructions are executed on a processor, the processor is enabled to implement steps in the method embodiment shown in FIG. 2, FIG. 5, or FIG. 9.

An embodiment of this application further provides a computer program product including program instructions. When the program instructions are executed on a processor, the processor is enabled to implement steps in the method embodiment shown in FIG. 2, FIG. 5, or FIG. 9.

A person of ordinary skill in the art may be aware that, in combination with method steps and units described in embodiments disclosed in this specification, the method steps and units can be implemented by electronic hardware, computer software, or a combination thereof. To clearly describe interchangeability between the hardware and the software, the foregoing descriptions have generally described steps and compositions of embodiments based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatuses, and units, refer to a corresponding process in the foregoing method embodiments. Details are not described herein again.

In several embodiments provided in this application, the disclosed system, apparatuses and methods may be implemented in other manners. For example, the apparatus embodiments described above are merely examples. For example, division of the units is merely logical function division. In an actual implementation, there may be another division manner. For example, a plurality of units or components may be combined or integrated into another system, or some features may be ignored or not performed. In addition, displayed or discussed mutual couplings or direct couplings or communication connections may be implemented through some interfaces. Indirect couplings or communication connections between apparatuses or units may be implemented in electronic, mechanical, or other forms of connection.

Units described as separate parts may or may not be physically separate, and parts displayed as units may or may not be physical units, to be specific, may be located at one position, or may be distributed on a plurality of network units. Some or all of the units may be selected based on an actual requirement to achieve the objectives of the solutions in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to a conventional technology, or all or some of the technical solutions may be embodied in a form of a software product. The computer software product is stored in a storage medium, and includes several instructions for instructing a computer device (which may be a personal computer, a server, a network device, or the like) to perform all or some steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

All or some of the foregoing embodiments may be implemented by using software, hardware, firmware, or any combination thereof. When software is used for implementing embodiments, all or some of embodiments may be implemented in a form of a computer program product. The computer program product includes one or more computer program instructions. When the computer program instructions are loaded and executed on a computer, all or some of procedures or functions in embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer program instructions may be transmitted from a website, a computer, a server, or a data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

The foregoing descriptions are merely specific implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A secure packet transmission method, wherein the method comprises:
receiving, by a first site egress device edge in a wide area network, a virtual private network VPN service packet in virtual routing and forwarding VRF;
performing, by the first site edge, security protection on the VPN service packet based on an internet protocol security security association IPsec SA that is associated with the VRF and that is negotiated with a second site edge, to obtain a first packet;
encapsulating, by the first site edge into an outer layer of the first packet, tunnel information of an overlay end-to-end tunnel established between the first site edge and the second site edge, to obtain a second packet, wherein an underlay underlay tunnel corresponding to the overlay end-to-end tunnel comprises a plurality of segments of tunnels, the tunnel information comprises first information of a first point of presence POP, the first site edge is an ingress endpoint of the overlay end-to-end tunnel, the second site edge is an egress endpoint of the overlay end-to-end tunnel, and the overlay end-to-end tunnel passes through the first POP; and
sending, by the first site edge, the second packet to the second site edge through the overlay end-to-end tunnel.

2. The method according to claim 1, wherein performing security protection on the VPN service packet comprises:
performing encapsulating security payload ESP protocol encryption on the VPN service packet; and/or
encapsulating an authentication header authentication header into the VPN service packet.

3. The method according to claim 1 or 2, wherein the tunnel information further comprises second information of a second POP, the overlay end-to-end tunnel passes through the first POP and the second POP, the first site edge accesses the wide area network via the first POP, and the second site edge accesses the wide area network via the second POP.

4. The method according to claim 3, wherein the overlay end-to-end tunnel is a segment routing over internet protocol version 6 IPv6 SRv6 tunnel, the second packet comprises an IPv6 header and a segment routing header SRH, a destination address of the IPv6 header points to the first POP, and the SRH comprises the first information and the second information.

5. The method according to claim 4, wherein the first information is a first endpoint segment identifier END.SID of the first POP, and an operation associated with the first endpoint segment identifier END.SID comprises: matching an overlay overlay SRv6 policy between the first POP and the second POP based on a next-hop SID of the END.SID.

6. The method according to claim 3, wherein the overlay end-to-end tunnel is a segment routing multi-protocol label switching traffic engineering policy SR-MPLS TE policy, the second packet comprises an MPLS label stack, and the MPLS label stack comprises the first information and the second information.

7. The method according to claim 6, wherein the first information is a first node SID of the first POP, and an operation associated with the first node SID comprises:
matching an overlay overlay SR MPLS tunnel from the first POP to the second POP based on a next-hop SID of the first node SID in the label stack.

8. The method according to claim 3, wherein the overlay end-to-end tunnel is a tunnel encapsulated based on a generic network virtualization encapsulation GENEVE protocol, and the second packet is encapsulated based on SRv6 in GENEVE.

9. The method according to claim 3, wherein the overlay end-to-end tunnel is a tunnel encapsulated based on a generic routing encapsulation GRE protocol, and the second packet is encapsulated based on SRv6 over GRE.

10. The method according to any one of claims 1 to 9, wherein before receiving, by the first site edge, the service packet, the method further comprises:
receiving, by the first site edge, a border gateway protocol BGP route advertised by the second site edge, wherein the BGP route comprises a route type RT, the IPsec SA, an identifier of the second site edge, and an export route target export RT, wherein the route type RT indicates that the IPsec SA of the BGP route advertisement is used for performing end-to-end security protection on the VPN service packet in the virtual routing and forwarding VRF that matches the export RT; and
associating, by the first site edge, the IPsec SA with the VRF based on the route type RT and the export RT.

11. The method according to claim 10, wherein the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

12. The method according to claim 10 or 11, wherein the identifier of the second site edge comprises a site identifier site ID to which the second site edge belongs and a node identifier node ID of the second site edge.

13. The method according to any one of claims 10 to 12, wherein the BGP route comprises network layer reachability information NLRI, and the NLRI comprises the route type RT and the identifier of the second site edge.

14. The method according to any one of claims 10 to 13, wherein the BGP route comprises a tunnel encapsulation attribute type-length-value tunnel encapsulation attribute TLV, and the tunnel encapsulation attribute TLV comprises the IPsec SA.

15. The method according to any one of claims 10 to 14, wherein the BGP route comprises an extended community attribute, and the extended community attribute is used for carrying the export RT.

16. The method according to any one of claims 10 to 15, wherein the first site edge and the second site edge are site edges in a software-defined wide area network SD-WAN.

17. A secure packet transmission method, wherein the method comprises:
receiving, by a second site egress device edge in a wide area network, a second packet that is sent by a first site edge through an overlay overlay end-to-end tunnel established between the first site edge and the second site edge, wherein the second packet comprises a first packet and tunnel information that is of the overlay end-to-end tunnel and that is encapsulated into an outer layer of the first packet, an underlay underlay tunnel corresponding to the overlay end-to-end tunnel comprises a plurality of segments of tunnels, the tunnel information comprises first information of a first point of presence POP, the first site edge is an ingress endpoint of the overlay end-to-end tunnel, the second site edge is an egress endpoint of the overlay end-to-end tunnel, the overlay end-to-end tunnel passes through the first POP, and the first packet is a packet obtained by performing security protection on a virtual private network VPN service packet based on an internet protocol security security association IPsec SA negotiated between the second site edge and the first site edge; and decapsulating, by the second site edge, the second packet, to obtain the first packet; and
processing, by the second site edge, the first packet based on the IPsec SA, to obtain the VPN service packet.

18. The method according to claim 17, wherein processing the first packet comprises:
performing encapsulating security payload ESP protocol decryption on the first packet based on the IPsec SA; and/or
performing authentication on the first packet based on the IPsec SA and authentication data carried in an authentication header authentication header of the first packet.

19. The method according to claim 17 or 18, wherein the tunnel information further comprises second information of a second POP, the overlay end-to-end tunnel passes through the first POP and the second POP, the first site edge accesses the wide area network via the first POP, and the second site edge accesses the wide area network via the second POP.

20. The method according to claim 19, wherein the overlay end-to-end tunnel is a segment routing over internet protocol version 6 IPv6 SRv6 tunnel, the second packet comprises an IPv6 header and a segment routing header SRH, a destination address of the IPv6 header points to the first POP, and the SRH header comprises the first information and the second information.

21. The method according to claim 20, wherein the first information is a first endpoint segment identifier END.SID of the first POP, and an operation associated with the first endpoint segment identifier END.SID comprises: matching an overlay overlay SRv6 policy between the first POP and the second POP based on a next-hop SID of the END.SID.

22. The method according to claim 19, wherein the overlay end-to-end tunnel is a segment routing multi-protocol label switching traffic engineering policy SR-MPLS TE policy, the second packet comprises an MPLS label stack, and the MPLS label stack comprises the first information and the second information.

23. The method according to claim 22, wherein the first information is a first node SID of the first POP, and an operation associated with the first node SID comprises:
matching an overlay overlay SR MPLS tunnel from the first POP to the second POP based on a next-hop SID of the first node SID in the label stack.

24. The method according to claim 19, wherein the overlay end-to-end tunnel is a tunnel encapsulated based on a generic network virtualization encapsulation GENEVE protocol, and the second packet is encapsulated based on SRv6 in GENEVE.

25. The method according to claim 19, wherein the overlay end-to-end tunnel is a tunnel encapsulated based on a generic routing encapsulation GRE protocol, and the second packet is encapsulated based on SRv6 over GRE.

26. The method according to any one of claims 17 to 25, wherein before receiving, by the second site egress device edge in the wide area network, the second packet that is sent by the first site edge through the overlay overlay end-to-end tunnel, the method further comprises:
generating, by the second site egress device edge, a border gateway protocol BGP route, wherein the BGP route comprises a route type RT, the IPsec SA, an identifier of the second site edge, and an export route target export RT, wherein the route type RT indicates that the IPsec SA of the BGP route advertisement is used for performing end-to-end security protection on the VPN service packet in virtual routing and forwarding VRF that matches the export RT; and
advertising, by the second site edge, the BGP route to the first site edge.

27. The method according to claim 26, wherein the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

28. The method according to claim 26 or 27, wherein the identifier of the second site edge comprises a site identifier site ID to which the second site edge belongs and a node identifier node ID of the second site edge.

29. The method according to any one of claims 26 to 28, wherein the BGP route comprises network layer reachability information NLRI, and the NLRI comprises the route type RT and the identifier of the second site edge.

30. The method according to any one of claims 26 to 29, wherein the BGP route comprises a tunnel encapsulation attribute type-length-value tunnel encapsulation attribute TLV, and the tunnel encapsulation attribute TLV comprises the IPsec SA.

31. The method according to any one of claims 26 to 30, wherein the BGP route comprises an extended community attribute, and the extended community attribute is used for carrying the export RT.

32. The method according to any one of claims 26 to 31, wherein the first site edge and the second site edge are site edges in a software-defined wide area network SD-WAN.

33. A method for negotiating an internet protocol security security association IPsec SA, wherein the method comprises:
receiving, by a first site egress device edge in a wide area network, a border gateway protocol BGP route advertised by a second site edge, wherein the BGP route comprises a route type RT, the IPsec SA, an identifier of the second site edge, and an export route target export RT, wherein the route type RT indicates that the IPsec SA of the BGP route advertisement is used for performing end-to-end security protection on a service packet in virtual routing and forwarding VRF that matches the export RT; and
associating, by the first site edge, the IPsec SA with the VRF based on the route type RT and the export RT.

34. The method according to claim 33, wherein the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

35. The method according to claim 33 or 34, wherein the identifier of the second site edge comprises a site identifier site ID to which the second site edge belongs and a node identifier node ID of the second site edge.

36. The method according to any one of claims 33 to 35, wherein the BGP route comprises network layer reachability information NLRI, and the NLRI comprises the route type RT and the identifier of the second site edge.

37. The method according to any one of claims 33 to 36, wherein the BGP route comprises a tunnel encapsulation attribute type-length-value tunnel encapsulation attribute TLV, and the tunnel encapsulation attribute TLV comprises the IPsec SA.

38. The method according to any one of claims 33 to 37, wherein the BGP route comprises an extended community attribute, and the extended community attribute is used for carrying the export RT.

39. The method according to any one of claims 33 to 38, wherein the first site edge and the second site edge are site edges in a software-defined wide area network SD-WAN.

40. A method for negotiating an internet protocol security security association IPsec SA, wherein the method comprises:
generating, by a second site egress device edge in a wide area network, a border gateway protocol BGP route, wherein the BGP route comprises a route type RT, the IPsec SA, an identifier of the second site edge, and an export route target export RT, wherein the route type RT indicates that the IPsec SA of the BGP route advertisement is used for performing end-to-end security protection on a service packet in virtual routing and forwarding VRF that matches the export RT; and
advertising, by the second site edge, the BGP route to a first site edge.

41. The method according to claim 40, wherein the BGP route is a BGP software-defined wide area network SD-WAN route, and a sub-address family of the BGP SD-WAN route is an SD-WAN sub-address family; or the BGP route is a BGP ethernet virtual private network EVPN route, and a sub-address family of the BGP EVPN route is an EVPN sub-address family.

42. The method according to claim 40 or 41, wherein the identifier of the second site edge comprises a site identifier site ID to which the second site edge belongs and a node identifier node ID of the second site edge.

43. The method according to any one of claims 40 to 42, wherein the BGP route comprises network layer reachability information NLRI, and the NLRI comprises the route type RT and the identifier of the second site edge.

44. The method according to any one of claims 40 to 43, wherein the BGP route comprises a tunnel encapsulation attribute type-length-value tunnel encapsulation attribute TLV, and the tunnel encapsulation attribute TLV comprises the IPsec SA.

45. The method according to any one of claims 40 to 44, wherein the BGP route comprises an extended community attribute, and the extended community attribute is used for carrying the export RT.

46. The method according to any one of claims 40 to 45, wherein the first site edge and the second site edge are site edges in a software-defined wide area network SD-WAN.

47. A secure packet transmission apparatus, wherein the apparatus comprises a module configured to implement the method according to any one of claims 1 to 16.

48. A secure packet transmission apparatus, wherein the apparatus comprises a module configured to implement the method according to any one of claims 17 to 32.

49. An apparatus for negotiating an internet protocol security security association IPsec SA, wherein the apparatus comprises a module configured to implement the method according to any one of claims 33 to 39.

50. An apparatus for negotiating an internet protocol security security association IPsec SA, wherein the apparatus comprises a module configured to implement the method according to any one of claims 40 to 46.

51. A network device, comprising a memory and a processor, wherein the memory is configured to store instructions, and the processor is configured to execute the instructions stored in the memory, to implement the method according to any one of claims 1 to 16, or to implement the method according to any one of claims 17 to 32, or to implement the method according to any one of claims 33 to 39, or to implement the method according to any one of claims 40 to 46.

52. A system, comprising a first site egress device edge and a second site edge, wherein the first site edge is configured to perform the method according to any one of claims 1 to 16, and the second site edge is configured to perform the method according to any one of claims 17 to 32; or the first site edge is configured to perform the method according to any one of claims 33 to 39, and the second site edge is configured to perform the method according to any one of claims 40 to 46.

53. A computer storage medium, comprising program instructions, wherein when the program instructions are executed on a processor, the processor is enabled to implement the method according to any one of claims 1 to 16, or the processor is enabled to implement the method according to any one of claims 17 to 32, or the processor is enabled to implement the method according to any one of claims 33 to 39, or the processor is enabled to implement the method according to any one of claims 40 to 46.

54. A computer program product comprising program instructions, wherein when the program instructions are executed on a processor, the processor is enabled to implement the method according to any one of claims 1 to 16, or the processor is enabled to implement the method according to any one of claims 17 to 32, or the processor is enabled to implement the method according to any one of claims 33 to 39, or the processor is enabled to implement the method according to any one of claims 40 to 46.
